# EUROPÄISCHE PATENTSCHRIFT

(11) **EP 1 971 198 B1**
(45) Veröffentlichungstag und Bekanntmachung des Hinweises auf die Patenterteilung: **16.07.2014**
(21) Anmeldenummer: 07711338.9
(22) Anmeldetag: 11.01.2007
(51) Int. Cl.: A01D 45/02

(54) **PFLÜCKVORRICHTUNG**
PICKING ARRANGEMENT
DISPOSITIF DE CUEILLETTE

(30) Priorität: 11.01.2006 DE 102006001383
(43) Veröffentlichungstag der Anmeldung: 24.09.2008
(73) Patentinhaber: Carl Geringhoff GmbH & Co. KG, 59227 Ahlen (DE)
(72) Erfinder: KALVERKAMP, Felix, 49401 Damme (DE); KALVERKAMP, Klemens, 49401 Damme (DE)
(74) Vertreter: Habbel, Ludwig
(86) Internationale Anmeldenummer: PCT/EP2007/000218
(87) Internationale Veröffentlichungsnummer: WO 2007/082680

(56) Entgegenhaltungen:
- EP-A1- 1 106 049
- DE-A1- 19 622 719
- DE-U1-202005 003 236
- GB-A- 1 044 516
- US-A- 5 661 964
- US-A- 5 878 559

## Beschreibung

Die vorliegende Erfindung betrifft eine Pflückvorrichtung zum Pflücken wenigstens einer an einem länglichen Stängel einer Pflanze sitzenden Frucht, mit einer entlang des Erdbodens bewegbaren Halterung und einem an der Halterung vorgesehenen und von seitlichen Rändern begrenzten, länglichen Pflückspalt, durch den hindurch der Stängel unter Abtrennen der Frucht an den Rändern führbar ist. Ferner betrifft die Erfindung einen Pflückvorsatz mit mehreren solcher Pflückvorrichtungen sowie ein Verfahren zum Pflücken wenigstens einer an einem länglichen Stängel einer Pflanze sitzenden Frucht, wobei der Stängel einem von seitlichen Rändern begrenzten, länglichen Pflückspalt zugeführt und anschließend die Frucht an den Rändern vom Stängel getrennt wird, indem der Stängel durch den Pflückspalt hindurch geführt wird.

Aus der DE 32 13 542 A1 ist ein Verfahren und ein Gerät zum Ernten von Mais und anderen Körnerfrüchten bekannt, wobei die Pflanze durch Einzugswalzen, die unterhalb eines Pflückspalts angeordnet sind, in das Erntegerät eingezogen wird. Der Pflückspalt sorgt für eine Trennung der Kolben oder anderer Früchte von der Pflanze, wobei die Trennung von Kolben und Pflanze im Wesentlichen durch Brechen des Kolbenstängels an einer Brechkante erfolgt.

Aus der US 5 661 964 ist eine Erntemaschine zum Ernten von Mais bekannt, wobei ein länglicher Pflückspalt um mehr als 45° gegenüber einer vertikal zum Erdboden ausgerichteten Achse in Fahrtrichtung geneigt ist. Zum Ernten der Maiskolben werden die Maisstängel in etwa senkrecht zum Pflückspalt ausgerichtet durch diesen hindurchgeführt.

Die Erntevorrichtung gemäß der US - A - 5 878 559 führt die Pflanzen ebenfalls vertikal zu und trennt die Kolben während der Weiterbewegung der Stengel in ihre ursprüngliche Ausrichtung, d. h. es findet hier keine Umkehr der Bewegungsrichtung der Stängel statt. Bei dieser bekannten Erntevorrichtung ist aber kein Pflückspalt vorgesehen, an dessen Rand die Kolben abgetrennt werden. Vielmehr erfolgt die Abtrennung entlang einer Pflückbahn, die durch zwei quer zur Längsausrichtung des Stängels angeordnete, zum Teil horizontal bewegliche Flächen gebildet werden.

Aus der DE 196 22 719 A1 ist eine Reiheneinheit für die Maisernte bekannt, wobei die Maisstängel von einer Einzugskette ergriffen und in Abstreifschlitze, die von Abstreifrollen gebildet sind, geführt werden. Die Abstreifrollen ziehen die Maisstängel durch die Abstreifschlitze und die Maiskolben werden von den Stängeln abgetrennt, wenn sie mit Abstreifplatten in Berührung kommen. Die Maiskolben werden dann von Greifern der Einzugskette nach hinten gefördert und in einen Trog mit einer Förderschnecke gebracht.

Die Maisstängel werden dem Abstreifschlitz in einer Richtung zugeführt und anschließend in einer zu dieser senkrechten Richtung durch den Abstreifschlitz hindurch gezogen. Überschreitet die Geschwindigkeit, mit der die Reiheneinheit über das Maisfeld fährt, einen bestimmten Wert, kommt es zu einer übermäßigen Anhäufung von Maisstängeln im Abstreifschlitz, so dass nachrückende Maisstängel das Abstreifen der Maiskolben von zuvor eingezogenen Maisstängeln behindern können. Zur Abhilfe könnte die Durchzugsgeschwindigkeit der Maisstängel durch den Abstreifschlitz erhöht werden, dies führt jedoch oberhalb einer bestimmten Durchzugsgeschwindigkeit zu Beschädigungen an den Maiskolben. Zur Reduzierung von Ernteverlusten ist daher die Erntegeschwindigkeit begrenzt.

Ausgehend von diesem Stand der Technik ist es Aufgabe der Erfindung, eine Möglichkeit zu schaffen, die Erntegeschwindigkeit bei gleichzeitiger Schonung der zu erntenden Früchte zu erhöhen.

Diese Aufgabe wird erfindungsgemäß mit einer Pflückvorrichtung nach Anspruch 1, mit einem Pflückvorsatz nach Anspruch 49 und mit einem Verfahren nach Anspruch 51 gelöst. Bevorzugte Weiterbildungen sind in den Unteransprüchen gegeben.

Mittels der erfindungsgemäßen Pflückvorrichtung ist es möglich, den Stängel achsparallel oder im Wesentlichen achsparallel gegen den Pflückspalt zu führen bzw. von diesem aufzunehmen und dann durch den Pflückspalt hindurch zu führen. Dabei kann das Hindurchführen in derselben oder im Wesentlichen derselben Richtung wie das Zuführen erfolgen, so dass keine oder keine wesentliche Änderung des Bewegungsäblaufs zwischen Zuführen und Durchführen erforderlich ist. Idealerweise wird der Stängel auch achsparallel zum Pflückspalt ausgerichtet durch diesen hindurch geführt. Da in der Realität die zu erntende Pflanze aber regelmäßig nicht ideal gerade gewachsen ist und der oder die Früchte auch an unterschiedlichen Stellen am Stängel sitzen können, kann sich der Stängel beim Durchführen durch den Pflückspalt gegenüber diesem neigen. Trotz dieser Neigung ist mit der erfindungsgemäßen Pflückvorrichtung eine höhere Erntegeschwindigkeit als mit der Reiheneinheit gemäß der DE 196 22 719 A1 erzielbar, da der Stängel nicht in einem ersten Bewegungsablauf dem Pflückspalt zugeführt und anschließend in einem zu dem ersten Bewegungsablauf im Wesentlichen senkrechten Bewegungsablauf durch den Pflückspalt hindurch gezogen wird. Insbesondere erfolgt die Bewegung des Zuführens und/oder bevorzugt auch die Bewegung des Durchführens parallel oder im Wesentlichen parallel zum Erdboden.

Da die zu erntende Pflanze regelmäßig vertikal oder im Wesentlichen vertikal zum Erdboden ausgerichtet ist, ist auch der Pflückspalt mit seiner Längsachse vertikal oder im Wesentlichen vertikal zum Erdboden ausgerichtet. Somit ist eine kurze Bauweise möglich.

An der Halterung ist bevorzugt wenigstens ein Mitnehmer bewegbar geführt, mittels welchem der Stängel erfassbar und dem Pflückspalt zuführbar ist. Dabei ist der Stängel insbesondere mit seiner Längsachse parallel oder im Wesentlichen parallel zu der Längsachse des Pflückspalts ausgerichtet von dem Mitnehmer dem Pflückspalt zuführbar. Ferner kann der Stängel mittels des Mitnehmers durch den Pflückspalt unter Abtrennen der Frucht hindurch geführt werden, so dass derselbe Mitnehmer den Stängel gegen den Pflückspalt führen und durch den Pflückspalt hindurch führen kann.

Der Mitnehmer kann zum Beispiel an einer an der Halterung bewegbar geführten Kette befestigt sein. Bevorzugt ist der Mitnehmer aber an einer drehbar an der Halterung gelagerten Pflückwalze befestigt, deren Drehachse insbesondere parallel zur Längsachse des Pflückspalts ausgerichtet ist. Dabei kann die Pflückwalze, in Bewegungsrichtung der Pflückvorrichtung gesehen, insbesondere neben oder vor dem Pflückspalt angeordnet sein. Der Mitnehmer erstreckt sich bevorzugt radial zur Drehachse der Pflückwalze, wobei der Abstand zwischen einem radial äußeren Ende oder Endbereich des Mitnehmers und der Drehachse des Pflückwalze größer oder gleich dem Abstand zwischen der Drehachse der Pflückwalze und dem Pflückspalt sein kann. Der Mitnehmer ist bevorzugt an einem dem Erdboden zugewandten Ende oder Endbereich der Pflückwalze angeordnet und kann sich insbesondere unterhalb des Pflückspalts drehen. Der Mitnehmer ist bevorzugt axial gegenüber den Pflückspalt versetzt angeordnet, so dass er nicht gegen die Ränder des Pflückspalts stoßen kann. Die Pflückwalze kann konisch oder zylindrisch ausgebildet sein. Ferner kann der Pflückspalt ganz oder abschnittsweise gewendelt ausgebildet sein und zumindest teilweise um die Pflückwalze herum verlaufen. Die Längsachse des Pflückspalts kann sich somit in Richtung der Drehachse der Pflückwalze und teilweise um diese herum erstrecken.

Zusätzlich zu dem Mitnehmer kann die Pflückwalze mehrere Förderelemente aufweisen, die insbesondere im Abstand zueinander entlang der Drehachse der Pflückwalze an dieser angeordnet sind, wobei ein im Pflückspalt sitzender oder bereits durch den Pflückspalt hindurch geführter Stängel oder Teile davon mittels der Förderelemente von dem Pflückspalt weg förderbar sind. Ferner ist von den Förderelementen das Durchführen des Stängels durch den Pflückspalt unterstützbar. Die Förderelemente können Zackenscheiben und/oder Lamellen umfassen, die insbesondere zwischen den Zackenscheiben angeordnet sind. Die Lamellen erstrecken sich bevorzugt radial oder im Wesentlichen radial zur Drehachse der Pflückwalze. Ferner können die Lamellen rings der Drehachse der Pflückwalze angeordnet sein.

An der Pflückwalze kann wenigstens ein elastischer Finger befestigt sein, der sich radial oder in etwa radial von der Pflückwalze über eine Länge wegerstreckt, die größer als der Abstand zwischen der Pflückwalze und dem Pflückspalt ist. Bevorzugt ist dabei der elastische Finger an einem der Förderelemente befestigt. Ferner können mehre dieser Finger vorgesehen sein. Dieser Finger oder diese Finger erleichtern das Annehmen der Pflanze über die gesamte Länge. Dabei kann sich der elastische Finger am Pflückspalt oder am Pflückspaltrand elastisch oder federelastisch abbiegen und ist aus einem dafür geeigneten elastischen Material gefertigt.

An der Pflückwalze können mehrere Segmente ringförmig angeordnet und über Steckverbindungen befestigt sein. Dabei weisen insbesondere die Förderelemente die Segmenten auf oder sind von diesen gebildet. Jedes der Segmente weist bevorzugt einen Rücken und insbesondere zwei schräg oder quer zu dem Rücken verlaufende Schenkel auf, von denen wenigstens einer oder beide an ihrem radial äußeren Rand mit Zacken versehen sind. Jedes Segment kann U-förmig ausgebildet sein. Ferner ist es möglich, dass der Rücken gegenüber den Schenkeln radial verlängert ist und eine Reißkante bildet. Entlang der Drehachse der Pflückwalze können mehrere derartiger Ringanordnungen von Segmenten versetzt zueinander vorgesehen sein. Bei den Steckverbindungen handelt es sich bevorzugt um lösbare Steckverbindungen, so dass die Segmente austauschbar sind. Insbesondere weisen die Segmente Steckfüße auf, mit denen sie in Schlitze eingesteckt sind, die in der Wand der bevorzugt als Rohr ausgebildeten Pflückwalze vorgesehen sind. Dabei können die Steckfüße abgewinkelt sein und die Rohrwand hintergreifen.

Die Pflückwalze steht insbesondere aufrecht bzw. die Drehachse der Pflückwalze ist insbesondere vertikal oder im Wesentlichen vertikal zum Erdboden ausgerichtet.

Zusätzlich zur Pflückwalze kann an der Halterung wenigstens eine Hilfswalze drehbar gelagert sein, deren Drehachse insbesondere parallel zur Längsachse des Pflückspalts und/oder zur Drehachse der Pflückwalze ausgerichtet ist, wobei mehrere Förderelemente im Abstand zueinander an der Hilfswalze angeordnet sein können, mittels welchen der durch den Pflückspalt hindurch geführte Stängel oder Teile davon von dem Pflückspalt weg förderbar sind.

Die Förderelemente der Hilfswalze können Lamellen umfassen, die sich insbesondere radial oder im Wesentlichen radial zur Drehachse der Hilfswalze erstrecken. Die Lamellen der Hilfswalze können insbesondere einen durch den Pflückspalt hindurch geführten Stängel oder Teile davon von dem Pflückspalt wegführen. Zusätzlich ist das Hindurchführen eines Stängels oder von Teilen davon durch den Pflückspalt mittels der Lamellen der Hilfswalze unterstützbar. Bevorzugt können die Lamellen der Hilfswalze in Zwischenräume zwischen den Lamellen der Pflückwalze eingreifen und/oder umgekehrt, so dass die Pflückwalze und die Hilfswalze zum Wegfördern eines durch den Pflückspalt hindurch geführten Stängels oder Teilen davon zusammenwirken könnten.

Zwischen den Lamellen der Pflückwalze können als Reißkanten ausgebildete Vorsprünge an der Pflückwalze angeordnet bzw. befestigt sein, an denen der durch den Pflückspalt hindurch geführte Stängel oder Teile davon aufgerissen werden können. Dieses Aufreißen ist hilfreich, um den Verrottungsprozess des Stängels oder von Teilen davon zu beschleunigen. Das Aufreißen wird bevorzugt dadurch unterstützt, dass die Pflückwalze und die Hilfswalze mit relativ zueinander unterschiedlichen Umfangsgeschwindigkeiten drehbar sind beziehungsweise gedreht werden. Ferner ist es möglich, Reißkanten an der Hilfswalze vorzusehen.

Ergänzend oder alternativ zu den Reißkanten können entlang einer insbesondere parallel zur Längsachse des Pflückspalts und/oder zur Drehachse der Pflückwalze ausgerichteten Achse mehrere Spleißelemente im Abstand zueinander an der Halterung befestigt sein, wobei der Stängel oder Teile davon zwischen den Spleißelementen und der Pflückwalze hindurch führbar und dabei aufspleißbar sind. Mittels dieser Ausgestaltung der erfindungsgemäßen Pflückvorrichtung ist es ebenfalls möglich, den Verrottungsprozess des Stängels beziehungsweise der Stängelteile zu beschleunigen.

Die Pflückwalze kann eine oder mehrere durchgehende oder in jeweils mehrere Stücke unterteilte Pflückleisten aufweisen, die sich z.B. parallel zur Drehachse der Pflückwalze erstrecken oder in Richtung der Drehachse der Pflückwalze spiralförmig um die Drehachse der Pflückwalze herum verlaufen. Die Pflückleiste oder die Pflückleisten sind dabei bevorzugt durch die Lamellen, insbesondere durch deren radial äußeren Endbereiche oder Ränder gebildet.

Der Stängel kann ohne Trennung von der Wurzel mittels des Mitnehmers dem Pflückspalt zugeführt und/oder durch diesen hindurchgeführt werden. Bevorzugt ist an einem dem Erdboden zugewandten Ende oder Endbereich der Pflückwalze aber wenigsten ein Trennmesser befestigt, mittels welchem der Stängel von der Wurzel der Pflanze abtrennbar ist. Hierdurch kann das Zuführen und/oder Durchführen des Stängels mittels der Pflückwalze erleichtert werden. Ferner kann der Reststoppel möglichst kurz gehalten werden. Zwischen der Pflückwalze und dem Trennmesser kann ein Getriebe vorgesehen sein, so dass das Trennmesser eine zu der Pflückwalze unterschiedliche Geschwindigkeit aufweisen kann. Das Trennmesser kann in oder entgegen dem Drehsinn der Pflückwalze drehen und betragsmäßig z.B. eine größere Geschwindigkeit als die Pflückwalze aufweisen. Alternativ kann an der Halterung wenigstens ein Trennmesser starr befestigt sein, gegen welches der Stängel mittels des Mitnehmers geführt und somit von der Wurzel der Pflanze getrennt werden kann. Dieses Trennmesser kann zackenförmig und/oder scheibenförmig ausgebildet sein. Ferner kann der Mitnehmer wenigstens einen abgewinkelten oder bogenförmigen Finger mit einer Schneide aufweisen oder bilden. Wird ein Stängel von dem Finger erfasst, so kann der Stängel gegen die Schneide des Trennmessers geführt und im Zusammenwirken mit der Schneide des Fingers scherenförmig abgeschnitten werden. Nach dem Abschneiden ist der Stängel mittels des Fingers in Richtung des Pflückspalts führbar und steht dabei insbesondere auf dem Trennmesser auf.

An einem dem Erdboden abgewandten Ende oder Endbereich der Pflückwalze kann ein Zerkleinerer vorgesehen sein, mittels welchem ein oberer Bereich oder Teil des Stängels zerkleinerbar ist. Der Zerkleinerer kann mehrere Zackenscheiben aufweisen, wobei der oberer Stängelteil zum Beispiel zwischen dem Zerkleinerer und der Halterung, insbesondere durch einen zwischen dem Zerkleinerer und der Halterung vorgesehenen Spalt, hindurch geführt und dabei zerkleinert werden kann.

An der Halterung kann wenigstens eine Teilerspitze und/oder eine die Pflückwalze teilweise umgebende Bogenführung befestigt sein, entlang welcher der Stängel mittels des Mitnehmers in Richtung des Pflückspalts führbar ist. Die Teilerspitze und/oder die Bogenführung sind insbesondere in einem dem Erdboden zugewandten Bereich der Halterung bzw. in enger räumlicher Nähe zum unteren Ende oder Endbereich der Pflückwalze angeordnet.

Der Mitnehmer kann fest auf der Pflückwalze sitzen und unveränderlich sein. Bevorzugt ist der Mitnehmer aber lösbar bzw. austauschbar an der Pflückwalze befestigt und/oder in seiner Form variierbar ausgestaltet, so dass eine Anpassung an unterschiedliche Pflanzen erfolgen kann. Der Mitnehmer kann als Stern ausgebildet sein, der rings des Umfangs der Pflückwalze mehrere sich radial von dieser weg erstreckende Finger aufweist. Jeder dieser Finger kann, wie oben bereits beschrieben, gekrümmt ausgebildet und mit einer Schneide versehen sein.

Zwischen der Pflückwalze und dem Pflückspalt kann an der Halterung wenigstens eine Mitnehmerführung befestigt sein, wobei der Stängel mittels des Mitnehmers entlang der Mitnehmerführung in Richtung des Pflückspalts führbar ist. Die Mitnehmerführung dient insbesondere dazu, dass sich der Stängel während des Zuführens zum Pflückspalt auf einer definierten Bahn bewegt.

Entlang einer insbesondere parallel zur Längsachse des Pflückspalts und/oder zur Drehachse der Pflückwalze ausgerichteten Achse sind bevorzugt mehrere Häckselmesser im Abstand zueinander angeordnet, mittels welchen der Stängel in mehrere Teile zerschneidbar ist. Die Häckselmesser können zum Beispiel starr an der Halterung oder an einer drehbar an der Halterung gelagerten Häckselwalze befestigt sein, deren Drehachse insbesondere parallel zur Längsachse des Pflückspalts und/oder zur Drehachse der Pflückwalze ausgerichtet ist. Ferner ist es möglich, dass die Häckselmesser an der Pflückwalze, an der Hilfswalze und/oder an einer anderen Walze befestigt sind. Da die Häckselmesser verschleißen können, sind diese insbesondere austauschbar an der Halterung, an der Häckselwalze, an der Pflückwalze, an der Hilfswalze und/oder an der anderen Walze befestigt. Die Häckselmesser und die als Förderelemente dienenden Zackenscheiben der Pflückwalze sind insbesondere axial versetzt zueinander angeordnet und können einander zumindest teilweise überlappen. Dabei hat es sich als vorteilhaft erwiesen, wenn die Häckselmesser an den Zackenscheiben anliegen und/oder gegen diese vorgespannt sind. Die gehäckselten Stängel- bzw. Pflanzenreste werden bevorzugt horizontal abgeführt, insbesondere seitlich, nach vorne und/oder nach hinten. Die Häckselmesser bzw. Häckselmesseranordnung kann auch unabhängig von der Erfindung bzw. von der erfindungsgemäßen Ausrichtung des Pflückspalts eingesetzt bzw. verwendet werden. In diesem Fall ist die Ausrichtung der Achse oder Häckselwalze, entlang welcher die Häckselmesser im Abstand zueinander angeordnet sind, unabhängig von der Ausrichtung des Pflückspalts, insbesondere kann der Pflückspalt beliebig ausgerichtet sein. Ferner kann die Pflückwalze durch eine beliebige bzw. zusätzliche Walze mit entsprechender Anordnung von Zackenscheiben ersetzt werden.

An der Halterung ist bevorzugt wenigstens eine Einzugswalze drehbar gelagert, deren Drehachse insbesondere parallel zur Längsachse des Pflückspalts und/oder parallel zur Drehachse der Pflückwalze ausgerichtet ist, wobei wenigstens ein sich radial von der Drehachse der Einzugswalze weg erstreckendes Einzugselement an der Einzugswalze drehfest befestigt ist. Mittels der Einzugswalze ist es möglich, den Stängel dem Mitnehmer zuzuführen, insbesondere dann, wenn die Pflanze außerhalb des Erfassungsbereichs des Mitnehmers angeordnet ist.

Durch die Einzugswalze wird somit der Bereich der dem Mitnehmer zuführbaren Pflanzen vergrößert. Ferner kann die Häckselwalze von der Einzugswalze gebildet sein.

Die Einzugswalze kann ein sich radial von der Drehachse der Einzugswalze weg erstreckendes zweites Einzugselement aufweisen, welches insbesondere drehfest mit der Einzugswalze verbunden ist. Die beiden Einzugselemente weisen bevorzugt einen Abstand zueinander auf, wobei zwischen den beiden Einzugselementen wenigstens ein sich radial von der Drehachse der Einzugswalze weg erstreckendes Zwischenelement vorgesehen sein kann, welches an der Einzugswalze befestigt ist.

Die Einzugswalze kann oberhalb des Einzugselements einen kegelstumpfförmigen Bereich aufweisen, dessen Durchmesser sich nach unten, d.h. mit abnehmendem Abstand zum Einzugselement vergrößert. Entlang des kegelstumpfförmigen Bereichs kann eine vom Stängel abgetrennte Frucht in radial äußere Bereiche des Einzugselements geführt werden. Der kegelstumpfförmige Bereich ist insbesondere im unteren Bereich der Einzugswalze ausgebildet und kann an das Einzugselement angrenzen.

Der Stängel kann ohne Trennung von der Wurzel mittels des Einzugselements dem Mitnehmer zugeführt werden. Bevorzugt ist aber wenigstens ein Trennmesser vorgesehen, mittels welchem der Stängel während des Zuführens von der Wurzel der Pflanze trennbar ist. Hierdurch wird das Zuführen des Stängels mittels der Einzugswalze erleichtert. Ferner kann der Reststoppel möglichst kurz gehalten werden. Das Trennmesser kann an einem dem Erdboden zugewandten Ende oder Endbereich der Einzugswalze befestigt sein. Dabei kann ein Getriebe zwischen Einzugswalze und Trennmesser vorgesehen werden, so dass dieses eine zu der Einzugswalze unterschiedliche Geschwindigkeit aufweisen kann. Das Trennmesser kann in oder entgegen dem Drehsinn der Einzugswalze drehen und betragsmäßig z.B. eine größere Geschwindigkeit als die Einzugswalze aufweisen. Alternativ oder ergänzend ist es möglich, wenigstens ein Trennmesser starr an der Halterung zu befestigen, wobei der Stängel mittels des Einzugselement der Einzugswalze gegen das Trennmesser führbar und somit der Stängel von der Wurzel der Pflanze trennbar ist. Dieses Trennmesser kann zackenförmig und/oder scheibenförmig ausgebildet sein. Ferner kann das Einzugselement wenigstens einen abgewinkelten oder bogenförmigen Finger mit einer Schneide aufweisen oder bilden. Wird ein Stängel von dem Finger erfasst, so kann der Stängel gegen die Schneide des Trennmessers geführt und im Zusammenwirken mit der Schneide des Fingers scherenförmig abgeschnitten werden. Nach dem Abschneiden ist der Stängel mittels des Fingers in Richtung der Pflückwalze führbar und steht dabei insbesondere auf dem Trennmesser auf.

An der Halterung kann wenigstens eine Teilerspitze und/oder wenigstens eine die Einzugswalze teilweise umgebende Bogenführung befestigt sein, wobei der Stängel mittels des Einzugselements entlang der Bogenführung in Richtung des Mitnehmers führbar ist. Die Teilerspitze erstreckt sich insbesondere ausgehend von der Halterung in Bewegungsrichtung der Pflückvorrichtung nach vorne, so dass mittels der Bogenführung auch auf der dem Mitnehmer abgewandten Seite der Teilerspitze angeordnete Pflanzen von dem Einzugselement dem Mitnehmer zuführbar sind.

Das Einzugselement kann fest auf der Einzugswalze sitzen und unveränderlich sein. Bevorzugt ist das Einzugselement aber lösbar bzw. austauschbar an der Einzugswalze befestigt und/oder in seiner Form variierbar ausgestaltet, insbesondere hinsichtlich seiner Länge, so dass eine Anpassung an unterschiedliche Pflanzen erfolgen kann. Das Einzugselement kann als Stern ausgebildet sein, der rings des Umfangs der Einführwalze mehrere sich radial von dieser weg erstreckende Finger aufweist. Jeder dieser Finger kann, wie oben bereits beschrieben, gekrümmt ausgebildet und mit einer Schneide versehen sein.

Zwischen der Einzugswalze und der Pflückwalze bzw. dem Pflückspalt kann an der Halterung wenigstens eine Einzugsführung befestigt sein, wobei der Stängel mittels des Einzugselements entlang der Einzugsführung in Richtung des Mitnehmers führbar ist. Die Einzugsführung dient insbesondere dazu, dass sich der Stängel während des Zuführens zum Mitnehmer auf einer definierten Bahn bewegt. Bevorzugt geht die Einzugsführung in die Mitnehmerführung über oder ist einstückig mit dieser ausgebildet.

Ferner kann im Bereich zwischen der Einzugswalze und der Pflückwalze wenigstens ein Leitblech an der Halterung befestigt sein. Das Leitblech ist bevorzugt in einer Richtung von der Einzugswalze bis zur Pflückwalze nach oben geneigt und erstreckt sich insbesondere bogenförmig um die Pflückwalze auf den Pflückspalt zu. Mittels des Leitblechs kann eine vom Stängel abgetrennte Frucht vom Pflückspalt weggeführt werden. In Längsrichtung des Pflückspalts gesehen können mehrere solcher Leitbleche im Abstand zueinander an der Halterung befestigt, sein.

Der Mitnehmer und das Einzugselement können axial gegeneinander versetzt angeordnet sein. Insbesondere ist die Summe aus dem Abstand zwischen einem radial äußerem Ende des Mitnehmers und der Drehachse der Pflückwalze und dem Abstand zwischen einem radial äußerem Ende des Einzugselements und der Drehachse der Einzugswalze größer oder gleich dem Abstand zwischen der Drehachse der Pflückwalze und der Drehachse der Einzugswalze, so dass der Mitnehmer und das Einzugselement überlappen können. Hierdurch wird vermieden, dass sich zwischen Einzugselement und Mitnehmer ein Bereich ausbildet, in dem ein dort angeordneter Stängel nicht erfasst werden kann.

Die Bewegung der Pflückvorrichtung entlang des Erdbodens kann zur Folge haben, dass hinsichtlich der Erntegeschwindigkeit eine von der ideal vertikalen Ausrichtung des Pflückspalts relativ zum Erdboden abweichende Ausrichtung des Pflückspalts optimal ist. Aus diesem Grund ist es möglich, den Pflückspalt, insbesondere in oder entgegen der Bewegungsrichtung, gegenüber der vertikalen Richtung zu neigen, entweder zusammen mit der Halterung oder relativ zu dieser. Der geneigte Pflückspalt kann zu einer vertikal zum Erdboden ausgerichteten Achse einen Winkel von bis zu plus/minus 45°, insbesondere von bis zu plus/minus 15° aufweisen. Bevorzugt sollte die Neigung aber nach vorne, das heißt in Bewegungsrichtung der Pflückvorrichtung, einen Winkel von 30° und nach hinten, das heißt entgegen der Bewegungsrichtung, einen Winkel von 15° nicht überschreiten. Soll der Pflückspalt mit seiner Längsachse als noch im Wesentlichen vertikal zum Erdboden ausgerichtet betrachtet werden, so kann die Längsachse des Pflückspalts in zwei Komponenten zerlegt werden, wobei eine erste der Komponenten vertikal zum Erdboden ausgerichtet ist und die zweite Komponente parallel zum Erdboden ausgerichtet ist. Der Betrag der ersten Komponente ist dann bevorzugt größer als der Betrag der zweiten Komponente. Die zweite Komponente ist dabei insbesondere parallel zur Bewegungsrichtung ausgerichtet oder liegt mit dieser auf einer Geraden.

An der Halterung kann, insbesondere oberhalb des Pflückspalts, der Einzugswalze und/oder der Pflückwalze, eine bevorzugt ein Rohr aufweisende Pflanzenführung befestigt sein, mittels welcher der Stängel neigbar, insbesondere von dem Pflückspalt weg neigbar ist. Das Neigen erfolgt bevorzugt in Bewegungsrichtung der Pflückvorrichtung. Ferner ist es möglich, ein oberes Reststück der Pflanze oberhalb der Pflückvorrichtung nach hinten, das heißt entgegen der Bewegungsrichtung der Pflückvorrichtung, abzuführen.

An der Halterung ist bevorzugt wenigstens ein zweiter Mitnehmer bewegbar geführt, wobei der Stängel mit seiner Längsachse parallel oder im Wesentlichen parallel zu der Längsachse des Pflückspalts ausgerichtet von beiden Mitnehmern dem Pflückspalt zugeführt werden kann, die im Abstand zueinander angeordnet sind. Hierdurch wird gewährleistet, dass selbst bei relativ langen und/oder biegsamen Pflanzenstängeln eine sichere Zuführung zum Pflückspalt möglich ist. Ferner wird der Stängel insbesondere mittels dieser beiden Mitnehmer auch durch den Pflückspalt hindurch geführt, der sich zumindest während des Durchführens zwischen den beiden Mitnehmern erstrecken kann. Die Mitnehmer sind dabei bevorzugt an einander gegenüberliegenden Enden oder Endbereichen der Pflückwalze befestigt, wobei insbesondere ein oberer der beiden Mitnehmer dem Pflückspalt überstreichen und ein unterer der beiden Mitnehmer den Pflückspalt unterstreichen kann. Für das beidseitige Erfassen des Stängels bzw. für das Erfassen des Stängels von beiden Mitnehmern kann es vorteilhaft sein, den Pflückspalt und/oder die Pflückwalze gegenüber einer Vertikal zum Erdboden ausgerichtete Achse in Bewegungsrichtung der Pflückvorrichtung zu neigen.

Die Pflückvorrichtung ist mittels der Halterung bevorzugt an einem Fahrzeug, insbesondere Kraftfahrzeug befestigt, welches zum Beispiel von einem Traktor oder einem Mähdrescher gebildet sein kann. Die Bewegungsrichtung der Pflückvorrichtung fällt in diesem Fall insbesondere mit der Fahrtrichtung des Fahrzeugs zusammen.

Wird der Stängel mittels eines Trennmessers von der Restpflanze abgetrennt, verbleibt ein im Boden sitzender Reststoppel. An der Halterung kann daher ein drehbarer Verteilschlegel angeordnet sein, mittels welchem der Reststoppel zerkleinerbar ist. Ferner können gehäckselte Pflanzenreste mittels des Verteilschlegels gezielt verteilt werden.

Der Pflückspalt ist hinsichtlich seiner Längsrichtung bevorzugt beidseitig offen. Ferner sind die Ränder des Pflückspalts bevorzugt von an der Halterung befestigten, insbesondere länglich ausgebildeten Seitenelementen, wie z.B. Blechen, gebildet, deren Längsachse bevorzugt parallel zur Längsachse des Pflückspalts verläuft. Es ist aber auch möglich, das die Halterung selbst die Ränder des Pflückspalts bildet. Ferner kann der Pflückspalt zwischen zwei Walzen, insbesondere zwischen der Pflückwalze und der Hilfswalze, ausgebildet sein. Bevorzugt ist der Pflückspalt in dem zwischen der Pflückwalze und der Hilfswalze ausgebildeten Keil bzw. keilförmigen Raum angeordnet.

Gemäß einer Variante ist einer der Ränder des Pflückspalts von der Pflückwalze und der andere der Ränder des Pflückspalts von der Halterung oder von einem an dieser befestigten Seitenelement gebildet. In diesem Fall kann die Pflückwalze speziell, insbesondere degressiv ausgebildet sein, so dass zwar der Stängel, nicht aber die Frucht in Zwischenräume zwischen den Förderelementen der Pflückwalze eindringen kann. Von der Pflückwalze wird in Bewegungs- bzw. Fahrtrichtung gesehen insbesondere der vordere Rand des Pflückspalts gebildet.

Die Ränder des Pflückspalts bzw. die Seitenelemente sind, in oder im Wesentlichen in Bewegungsrichtung gesehen, bevorzugt hintereinander angeordnet. Ferner kann eines der Seitenelemente des Pflückspalts an wenigstens einer mit der Halterung verbundenen Randhalterung befestigt sein, die sich durch eine in der Pflückwalze vorgesehene Ausnehmung hindurch erstreckt, die insbesondere als Schlitz ausgebildet ist.

Die Breite des Pflückspalts ist insbesondere größer als der Durchmesser des Pflanzenstängels, so dass dieser durch den Pflückspalt hindurchgeführt werden kann. Ferner ist die Breite des Pflückspalts bevorzugt kleiner als der Durchmesser bzw. der größte Durchmesser der zu erntenden Frucht, so dass diese nicht durch den Pflückspalt hindurchtreten kann sondern gegen dessen Ränder zur Anlage kommt und von dem durch den Pflückspalt hindurchgeführten Stängel abgetrennt bzw. abgerissen wird. Die Frucht fällt dann auf Grund ihrer Schwerkraft Richtung Erdboden, kann aufgefangen und dann einem Trog zugeführt werden, der z.B. an der Halterung befestigt ist. Insbesondere kann die Frucht aber direkt vom Trog aufgefangen werden, der sich bevorzugt bis unter den Pflückspalt erstreckt.

Die erfindungsgemäße Pflückvorrichtung eignet sich insbesondere zum Abernten von Pflanzen, die einen länglichen Stängel aufweisen, an dem die Frucht oder die Früchte oberhalb des Erdbodens sitzen. Bevorzugt handelt es sich bei den Pflanzen um Maispflanzen oder Sonnenblumen, so dass die Frucht z.B. von einem Maiskolben oder von einem Korb (Blütenstand) einer Sonnenblumen gebildet ist. Die Breite des Pflückspalts ist bevorzugt variierbar bzw. einstellbar, insbesondere an die zu erntenden Früchte bzw. an die jeweiligen Bedingungen anpassbar.

Die Erfindung betrifft ferner einen Pflückvorsatz oder eine Reihenanordnung mit einem Rahmen und mehreren erfindungsgemäßen Pflückvorrichtungen, wobei die Halterungen der Pflückvorrichtungen zu dem Rahmen zusammen gesetzt oder von diesem gebildet sein können. Die Pflückvorrichtungen des Pflückvorsatzes (Reihenanordnung) sind dabei gemäß allen zuvor genannten Ausgestaltungen weiterbildbar. Der Pflückvorsatz (Reihenanordnung) bietet die Möglichkeit, einen größeren Bereich abzuernten, wobei die Pflückvorrichtungen insbesondere nebeneinander, bevorzugt quer zur Bewegungsrichtung, an dem Rahmen angeordnet sind. Der Pflückvorsatz (Reihenanordnung) kann somit insgesamt eine Breite aufweisen, die für einen Transport oder für eine Fahrt auf einer öffentlichen Straße hinderlich ist, so dass der Rahmen bevorzugt mehrere schwenkbar miteinander verbundene Rahmenteile aufweist, die zusammen geklappt werden können. Alternativ kann der Rahmen auch in mehrere Teile zerlegt oder als Ganzes vom Fahrzeug getrennt werden.

Bei dem erfindungsgemäßen Pflückvorsatz (Reihenanordnung) ist im Vergleich zu herkömmlichen Lösungen ein sehr großer aktiver Bereich vorhanden, so dass insbesondere eine reihenlose Aufnahme von Pflanzenstängeln möglich ist. Der aktive Bereich soll hierbei durch einen Bereich gebildet werden, in dem ein Stängel von einem der Mitnehmer und/oder einem der Einzugselemente erfasst und unmittelbar oder mittelbar dem Pflückspalt zugeführt werden kann. Erfindungsgemäß gibt es keine oder nur sehr kleine erfassungsfreie Bereiche, die insbesondere vernachlässigbar klein sind. Bei herkömmlichen Pflückvorsätzen hingegen ist zwischen zwei aktiven Bereichen ein inaktiver Bereich ausgebildet, der breiter als die aktiven Bereiche sein kann. Um die Stängel noch sauber erfassen zu können, ist bei den herkömmlichen Pflückvorsätzen daher die Fahrtrichtung an die Richtung der Reihen der abzuerntenden Pflanzen auszurichten. Ferner werden herkömmliche Pflückvorsätze an übliche Reihenweiten der abzuerntenden Pflanzen angepasst, so dass diese Pflückvorsätze für andere Reihenweiten nicht oder nur eingeschränkt verwendet werden können. Diese Einschränkungen können bei dem erfindungsgemäßen Pflückvorsatz (Reihenanordnung) entfallen.

Ferner umfasst die Erfindung die Verwendung einer erfindungsgemäßen Pflückvorrichtung zum Pflücken von wenigstens einer an einem länglichen Stängel einer Pflanze sitzenden Frucht, wobei die Pflanze insbesondere eine Maispflanze oder Sonnenblume ist. Die Pflückvorrichtung kann dabei gemäß allen zuvor genannten Ausgestaltungen weitergebildet sein.

Zusätzlich betrifft die Erfindung ein Verfahren zum Pflücken wenigstens einer an einem länglichen Stängel einer Pflanze sitzenden Frucht, wobei der Stängel einem von seitlichen Rändern begrenzten, länglichen Pflückspalt zugeführt und anschließend die Frucht an den Rändern vom Stängel getrennt wird, indem der Stängel durch den Pflückspalt hindurch geführt wird, wobei der Stängel mit seiner Längsachse parallel oder im Wesentlichen parallel zu der Längsachse des Pflückspalts ausgerichtet dem Pflückspalt zugeführt wird.

Bevorzugt wird der Stängel mit seiner Längsachse vertikal oder im Wesentlichen vertikal zum Erdboden ausgerichtet dem Pflückspalt zugeführt. Ferner kann der Stängel mit seiner Längsachse parallel oder im Wesentlichen parallel zu der Längsachse des Pflückspalts ausgerichtet durch den Pflückspalt hindurchgeführt werden.

Das Verfahren wird insbesondere unter Verwendung der erfindungsgemäßen Pflückvorrichtung und/oder des erfindungsgemäßen Pflückvorsatzes (Reihenanordnung) durchgeführt.

Die Erfindung wird nachfolgend anhand bevorzugter Ausführungsformen unter Bezugnahme auf die Zeichnung beschrieben. In der Zeichnung zeigen:
- Fig. 1:: Eine perspektivische Ansicht eines Erntefahrzeugs mit einem Pflückvorsatz gemäß einer ersten Ausführungsform der Erfindung,
- Fig. 2:: eine Seitenansicht des Erntefahrzeugs nach Fig. 1,
- Fig. 3:: eine perspektivische Teilansicht des Pflückvorsatzes nach Fig. 1,
- Fig. 4:: eine perspektivische Ansicht einer Pflückwalze des Pflückvorsatzes nach Fig. 3,
- Fig. 5:: eine Schnittansicht durch die Pflückwalze nach Fig. 4,
- Fig. 6:: eine perspektivische Darstellung eines Mitnehmers und eines Einzugselements nach Fig. 3,
- Fig. 7:: eine Draufsicht auf die Anordnung nach Fig. 6,
- Fig. 8:: eine Unteransicht der Anordnung nach Fig. 6,
- Fig. 9:: eine andere Schnittansicht durch die Pflückwalze nach Fig. 4,
- Fig. 10:: eine Pflückwalzenanordnung gemäß einer zweiten Ausführungsform der Erfindung,
- Fig. 11:: eine Schnittansicht durch die Pflückwalzenanordnung nach Fig. 10,
- Fig. 12:: eine perspektivische Teilansicht einer Pflückwalzenanordnung gemäß einer dritten Ausführungsform der Erfindung,
- Fig. 13:: eine Variante der Anordnung nach Fig. 12,
- Fig. 14:: eine perspektivische Ansicht einer Pflückwalzenanordnung gemäß einer vierten Ausführungsform,
- Fig. 15:: eine teilweise Draufsicht auf einen Pflückvorsatz mit Antriebselementen,
- Fig. 16:: eine perspektivische Darstellung eines Mitnehmers und eines Einzugselements gemäß einer fünften Ausführungsform,
- Fig. 17:: eine Draufsicht auf einen Pflückvorsatz gemäß einer sechsten Ausführungsform,
- Fig. 18:: eine perspektivische Ansicht des Erntefahrzeugs nach Fig. 1 im teilweise zusammengeklappten Zustand des Pflückvorsatzes,
- Fig. 19:: eine perspektivische Darstellung des Erntefahrzeugs nach Fig. 1 im vollständig zusammengeklappten Zustand des Pflückvorsatzes,
- Fig. 20:: eine perspektivische Teilansicht eines Pflückvorsatzes gemäß einer siebten Ausführungsform,
- Fig. 21:: eine teilweise Unteransicht eines Pflückvorsatzes gemäß einer achten Ausführungsform,
- Fig. 22:: eine perspektivische Darstellung eines Häckselmessers mit auswechselbarer Messerklinge,
- Fig. 23:: eine Seitenansicht eines Pflückvorsatzes gemäß einer neunten Ausführungsform,
- Fig. 24:: eine perspektivische Ansicht eines Pflückvorsatzes gemäß einer zehnten Ausführungsform,
- Fig. 25:: eine Schnittansicht durch die Pflückwalzenanordnung nach Fig. 24,
- Fig. 26:: eine Draufsicht auf ein Erntefahrzeug mit einem Pflückvorsatz gemäß einer elften Ausführungsform im teilweise zusammengeklappten Zustand,
- Fig. 27:: eine perspektivische Ansicht des Erntefahrzeugs nach Fig. 26 im vollständig zusammengeklappten Zustand des Pflückvorsatzes,
- Fig. 28:: eine Seitenansicht eines Pflückvorsatzes gemäß einer zwölften Ausführungsform,
- Fig. 29:: eine perspektivische Darstellung von Mitnehmern und Einzugselementen gemäß einer Abwandlung der ersten Ausführungsform,
- Fig. 30:: eine Draufsicht auf die Anordnung nach Fig. 29,
- Fig. 31:: eine perspektivische Ansicht eines Pflückvorsatzes gemäß einer Abwandlung der ersten Ausführungsform,
- Fig. 32:: eine vergrößerte Ansicht eines Ausschnitts aus Fig. 31,
- Fig. 33:: eine perspektivische Teilansicht einer Pflückvorrichtung gemäß einer Abwandlung der ersten Ausführungsform,
- Fig. 34:: eine Schnittansicht durch eine Pflückvorrichtung gemäß einer Abwandlung der ersten Ausführungsform,
- Fig. 35:: eine Seitenansicht einer Pflückwalze gemäß einer Abwandlung der ersten Ausführungsform und
- Fig. 36:: eine Schnittansicht durch die Pflückwalze nach Fig. 35.

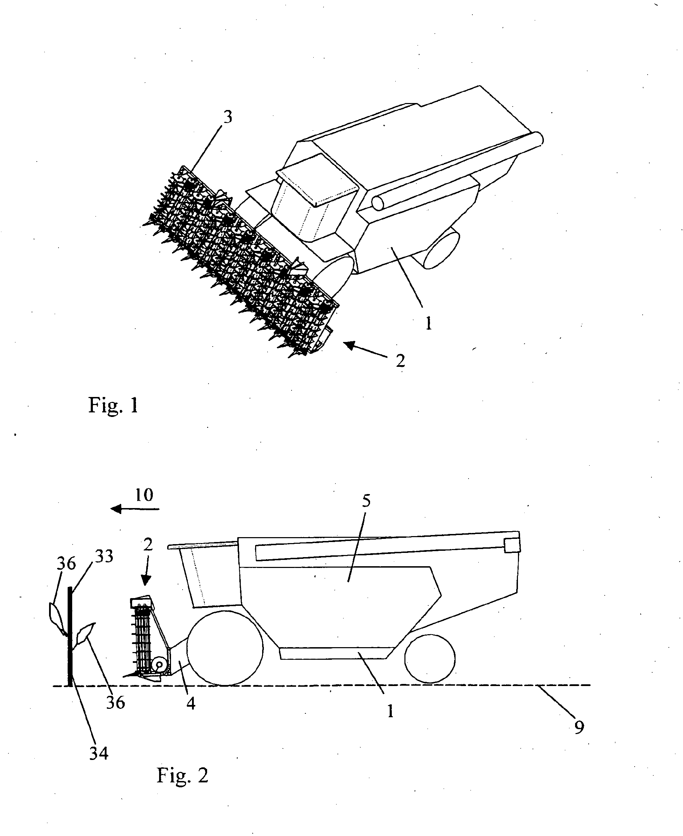

Aus den Fig. 1 und 2 sind unterschiedliche Ansichten eines Erntefahrzeugs 1 mit einem Pflückvorsatz 2 gemäß einer ersten Ausführungsform der Erfindung ersichtlich, der einen Rahmen bzw. eine Halterung 3 aufweist und über diese an dem Erntefahrzeug 1 befestigt ist. Das Erntefahrzeug 1 weist einen sich zu dem Pflückvorsatz 2 hin erstreckenden Schrägförderer 4 auf, mittels welchem von dem Pflückvorsatz 2 gepflückte Früchte 36 einen im Erntefahrzeug 1 angeordneten Sammelbehälter 5 zuführbar sind.

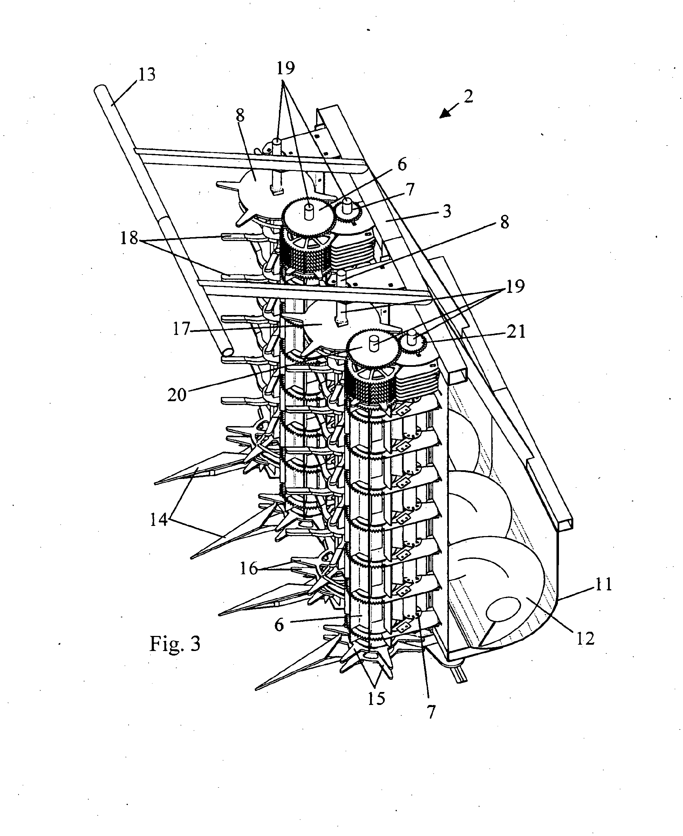

Aus Fig. 3 ist eine perspektivische Teilansicht des Pflückvorsatzes 2 ersichtlich, der mehrere Pflückwalzen 6, mehrere Hilfswalzen 7 und mehrere Einzugswalzen 8 aufweist, wobei die Walzen 6, 7 und 8 auf einer dem Erntefahrzeug 1 abgewandten Seite der Halterung 3 angeordnet und jeweils drehbar an dieser gelagert sind. Die Drehachsen der Walzen 6, 7 und 8 verlaufen parallel zueinander und sind gegenüber einer vertikal zum Erdboden 9 ausgerichteten Geraden geringfügig in Fahrtrichtung 10 des Erntefahrzeugs 1 geneigt (s. Fig. 2). Die Neigung ist aber gering, so dass die Drehachsen der Walzen 6, 7 und 8 im wesentlichen vertikal zum Erdboden 9 ausgerichtet sind. Ferner ist an der Halterung 3 ein Trog 11 befestigt, in dem eine Förderschnecke 12 verläuft, mittels welcher von dem Pflückvorsatz 2 gepflückte Früchte 36 dem Schrägförderer 4 zuführbar sind, der diese dann, gegebenenfalls unter Zwischenschaltung einer Drescheinrichtung, in den Sammelbehälter 5 transportiert. An dem dem Erdboden 9 abgewandten Ende der Halterung 3 kann eine Pflanzenführung 13 befestigt sein, mittels welcher zumindest die oberen Bereiche von den Früchten 36 tragenden Pflanzen 34 in Fahrtrichtung 10 geneigt werden können. Die Pflanzenführung 13 erstreckt sich dabei ausgehend von der Halterung 3 von dem Erntefahrzeug 1 weg und ist lediglich optional vorgesehen, so dass die Pflanzenführung 13 auch entfallen kann. Im Bereich der Pflückwalzen 6 und der Einzugswalzen 8 sind jeweils Teilerspitzen 14 an der Halterung 3 befestigt, die im Bereich der unteren Enden dieser Walzen 6, 8 sitzen und sich im wesentlichen in Fahrtrichtung 10 von der Halterung 3 wegerstrecken.

Jede Pflückwalze 6 weist an ihrem unteren Ende zwei sternförmig ausgebildete Mitnehmer 15 auf, die drehfest mit der jeweiligen Pflückwalze 6 verbunden sind. Ferner weist jede Einzugswalze 8 an ihrem unteren Ende zwei sternförmige Einzugselemente 16 auf, die drehfest mit der jeweiligen Einzugswalze 8 verbunden sind. Zusätzlich weist jede Einzugswalze 8 an ihrem oberen Ende ein sternförmiges Einzugselement 17 auf, das drehfest mit der jeweiligen Einzugswalze 8 verbunden ist. An jeder Einzugswalze 8 sind mehrere im Abstand zueinander angeordnete, sternförmig ausgebildete Zwischenelemente 18 vorgesehen und drehfest mit der jeweiligen Einzugswalze 8 verbunden. Die Walzen 6, 7 und 8 können zu mehreren Pflückvorrichtungen 19 zusammengefasst werden, die nebeneinander entlang der Halterung 3 quer zur Fahrtrichtung 10 angeordnet sind und jeweils eine der Pflückwalzen 6, eine der Hilfswalzen 7 und eine der Einzugswalzen 8 aufweisen. Am oberen Ende jeder Pflückwalze 6 ist ein Stirnrad 20 angeordnet, welches mit einem Stirnrad 21 kämmt, das am oberen Ende der Hilfswalze 7 der zugehörigen Pflückvorrichtung 19 angeordnet ist. Die Stirnräder 20 und 21 sind dabei drehfest mit den jeweiligen Walzen 6 bzw. 7 verbunden.

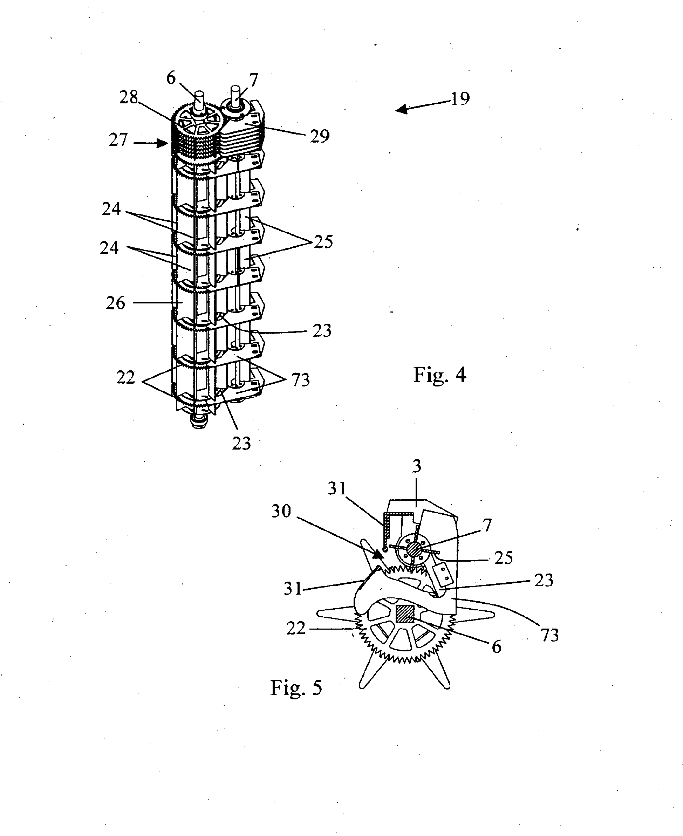

Aus Fig. 4 ist eine perspektivische Teildarstellung einer der Pflückvorrichtungen 19 ohne die zugehörige Einzugswalze 8 dargestellt, wobei an der Pflückwalze 6 mehrere im Abstand zueinander angeordnete Zackenscheiben 22 befestigt sind, gegen die mehrere an der Halterung 3 befestigte und im Abstand zueinander angeordnete Häckselmesser 23 vorgespannt sind. Ferner sind zwischen den Zackenscheiben 22 mehrere Lamellen 24 rings der Drehachse der Pflückwalze 6 angeordnet. Die Hilfswalze 7 weist ebenfalls mehrere Lamellen 25 auf, die in zwischen den Lamellen 24 ausgebildete Zwischenräume 26 eingreifen können. Ferner ist am oberen Ende der Pflückwalze 6 ein Zerkleinerer 27 vorgesehen, der mehrere an der Pflückwalze 6 befestigte Zackenscheiben 28 und mehrere an der Halterung 3 befestigte Messer 29 aufweist, so dass von den Zackenscheiben 28 zu den Messern 29 transportiertes Pflanzenmaterial zwischen den Zackenscheiben 28 und den Messern 29 zerkleinert wird.

Aus Fig. 5 ist eine Schnittansicht der in Fig. 4 dargestellten Anordnung ersichtlich, wobei ferner ein Pflückspalt 30 dargestellt ist, der seitlich von an der Halterung 3 befestigten Seitenelementen (Blechen) 31 begrenzt ist, die somit seitliche Ränder des Pflückspalts 30 bilden. Der Pflückspalt 30 ist länglich ausgebildet, wobei sich dessen Längsachse parallel zur Drehachse der Pflückwalze 6 erstreckt. Einer der Seitenelemente 31 des Pflückspalts 30 ist an wenigstens einer mit der Halterung 3 verbundenen Randhalterung 73 befestigt, die sich durch einen in der Pflückwalze 6 vorgesehenen Schlitz hindurch erstreckt und mit einer der Zackenscheiben 22 überlappt.

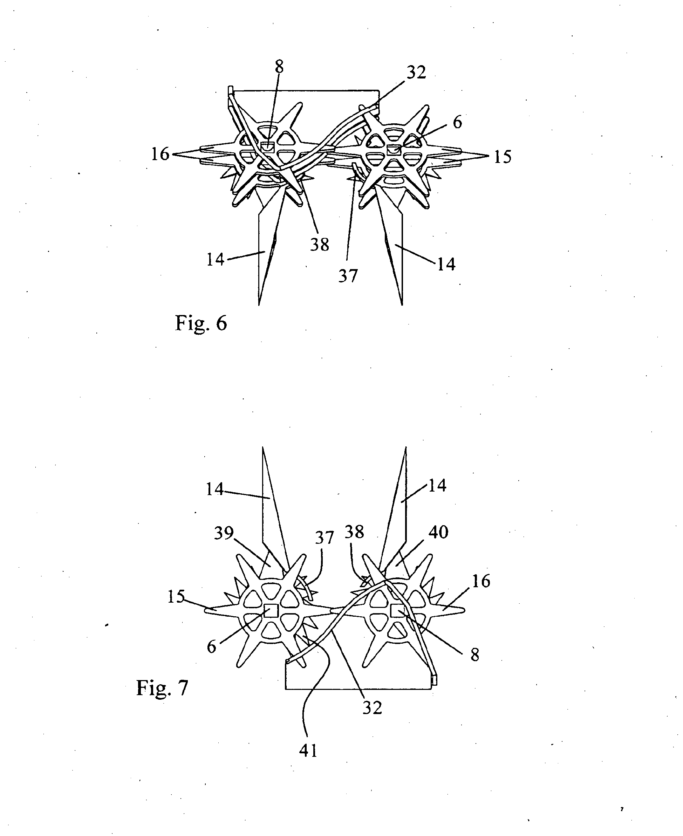

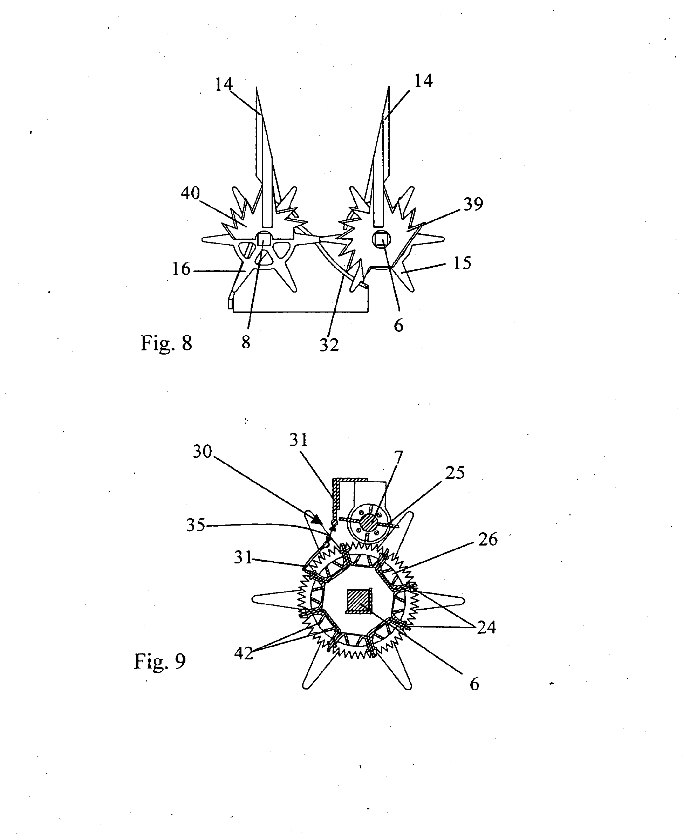

Aus Fig. 6 ist eine perspektivische Darstellung der Mitnehmer 15 und der Einzugselemente 16 ersichtlich, wobei zwischen den Einzugselementen 16 bzw. der Einzugswalze 8 und den Mitnehmern 15 bzw. der Pflückwalze 6 an der Halterung 3 eine Einzugsführung 32 befestigt ist, entlang welcher ein von den Einzugselementen 16 erfasster Stängel 33 (s. Fig. 2) der Pflanze 34 den Mitnehmern 15 zuführbar ist. Der Stängel 33 kann dann von den Mitnehmern 15 erfasst und entlang der Einzugsführung 32 dem Pflückspalt 30 zugeführt und durch diesen hindurchgeführt werden. Die Einzugsführung 32 bildet somit gleichzeltig eine Mitnehmerführung. Da die Breite 35 (s. Fig. 9) des Pflückspalts 30 größer als der Durchmesser des Pflanzenstängels 33 ist, kann dieser durch den Pflückspalt 30 hindurchgeführt werden. Allerdings ist die Breite 35 des Pflückspalts 30 kleiner als der Durchmesser (bzw. größte Durchmesser) der Früchte 36, so dass diese nicht durch den Pflückspalts 30 hindurchtreten können sondern gegen die Ränder 31 zur Anlage kommen und von dem durch den Pflückspalt 30 hindurchgeführten Stängel 33 abgetrennt bzw. abgerissen werden. Die Früchte 36 fallen dann auf Grund ihrer Schwerkraft Richtung Erdboden 9, werden aufgefangen und dann dem Trog 11 zugeführt. Insbesondere können die Früchte aber direkt vom Trog 11 aufgefangen werden, der sich bevorzugt bis unter den Pflückspalt erstreckt.

Aus Fig. 6 ist ersichtlich, dass die Mitnehmer 15 zu den Einzugselementen 16 axial versetzt angeordnet sind, so dass die Mitnehmer 15 mit den Einzugselementen 16 überlappen können. Somit ist gewährleistet, dass zwischen der Pflückwalze 6 und der Einzugswalze 8 kein Leerraum entsteht, in dem ein Pflanzenstängel 33 weder von den Mitnehmern 15 noch von den Einzugselementen 16 erfasst werden kann.

Fig. 7 zeigt eine Draufsicht der Anordnung nach Fig. 6, wobei eine sich teilweise um die Pflückwalze 6 herumerstreckende Bogenführung 37 an der Halterung 3 befestigt ist. Ferner ist an der Halterung 3 eine sich teilweise um die Einzugswalze 8 herum erstreckende Bogenführung 38 befestigt, wobei die beiden Bogenführungen 37, 38 im Bereich der Teilerspitzen 14 angeordnet, insbesondere an diesen befestigt sind.

Ferner sind Trennmesser 39 und 40 an der Halterung 3 unterhalb der Pflückwalze 6 und unterhalb der Einzugswalze 8 befestigt, was deutlicher aus Fig. 8 hervorgeht, die eine Unteransicht der Anordnung nach Fig. 6 zeigt. Ein außerhalb des Zwischenraums zwischen den beiden Teilerspitzen 14 bzw. zwischen der Pflückwalze 6 und der Einzugswalze 8 angeordneter und von den Mitnehmern 15 erfasster Pflanzenstängel 33 kann somit gegen das Messer 39 geführt, von diesem durchtrennt und danach entlang der Bogenführung 37 dem Pflückspalt 30 zugeführt werden. Ferner kann ein außerhalb des Zwischenraums zwischen den beiden Teilerspitzen 14 bzw. zwischen der Pflückwalze 6 und der Einzugswalze 8 angeordneter und von dem Einzugselement 16 erfasster Pflanzenstängel 33 gegen das Messer 40 geführt, dort durchtrennt und anschließend entlang der Bogenführung 38 zur Einzugsführung 32 hingeführt werden. Entlang dieser wird der Pflanzenstängel 33 von dem Einzugselement 16 dem Mitnehmer 15 zugeführt, welcher den Pflanzenstängel 33 erfasst und entlang der Einzugsführung 32 dem Pflückspalt 30 zuführt und durch diesen hindurchführt. Die Messer 39 und 40 weisen mehrere Klingen auf, so dass an unterschiedlichen Stellen entlang des Umfangs der Pflückwalze 6 bzw. der Einzugswalze 8 ein Pflanzenstängel 33 durchtrennt werden kann. Insbesondere weist das Messer 39 wenigstens eine im Bereich der Einzugsführung 32 vor dem Pflückspalt 30 angeordnete Messerklinge 41 auf, mittels welcher ein von dem Mitnehmer 15 erfasster Pflanzenstängel 33 vor dem Durchführen durch den Pflückspalt 30 durchtrennt werden kann.

Aus Fig. 9 ist ein anderer Querschnitt durch die Pflückvorrichtung 19 nach Fig. 4 ersichtlich, wobei zwischen den rings der Drehachse der Pflückwalze 6 angeordneten Lamellen 24 bzw. in den Zwischenräumen 26 mehrere als Reißkanten ausgebildete Vorsprünge 42 angeordnet sind. Ein durch den Pflückspalt 30 hindurchgeführter Pflanzenstängel 33 oder ein Teil davon wird von den Lamellen 25 erfasst, in die Zwischenräume 26 hinein geführt, mit den Reißkanten 42 in Kontakt gebracht und an den Reißkanten 42 vorbei geführt. Dabei wird der Stängel 33 bzw. das Stängelteil aufgerissen, wodurch der Verrottungsprozess des Stängels 33 bzw. des Stängelteils beschleunigt werden kann. Das Aufreißen wird ferner dadurch begünstigt, dass die Lamellen 25 eine unterschiedliche Umfangsgeschwindigkeit als die Lamellen 24 aufweisen. Bevorzugt ist die Umfangsgeschwindigkeit der Lamellen 25 betragsmäßig doppelt so groß wie die Umfangsgeschwindigkeit der Lamellen 24.

Ferner wird der Stängel 33 von den Häckselmessern 23 in mehrere Teile zerschnitten, wonach die zerschnittenen und aufgerissenen Stängel 33 bzw. Stängelteile insbesondere in Fahrtrichtung 10 und/oder quer zu dieser ausgeworfen werden.

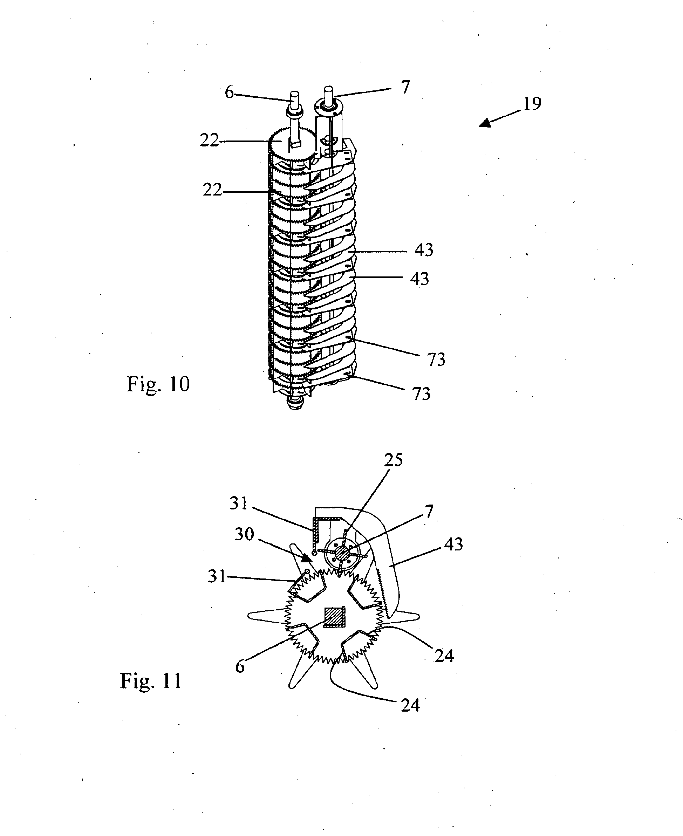

Aus Fig. 10 ist eine perspektivische Teildarstellung einer Pflückvorrichtung 19 gemäß einer zweiten Ausführungsform ersichtlich, wobei zu der ersten Ausführungsform identische oder ähnliche Merkmale mit denselben Bezugszeichen wie bei der ersten Ausführungsform bezeichnet sind. Die zweite Ausführungsform stimmt im Wesentlichen mit der ersten Ausführungsform überein, allerdings sind zusätzlich zur ersten Ausführungsform mehrere im Abstand zueinander angeordnete Spleißelemente 43 an der Halterung 3 befestigt, wobei der durch den Pflückspalt 30 hindurchgeführte Stängel 33 oder Teile davon gegen die Spleißelemente 43 geführt und dort aufgesplissen werden können. In diesem Fall können die Reißkanten 42 entfallen, was aus Fig. 11 ersichtlich ist, die eine Schnittansicht durch die Anordnung nach Fig. 10 zeigt.

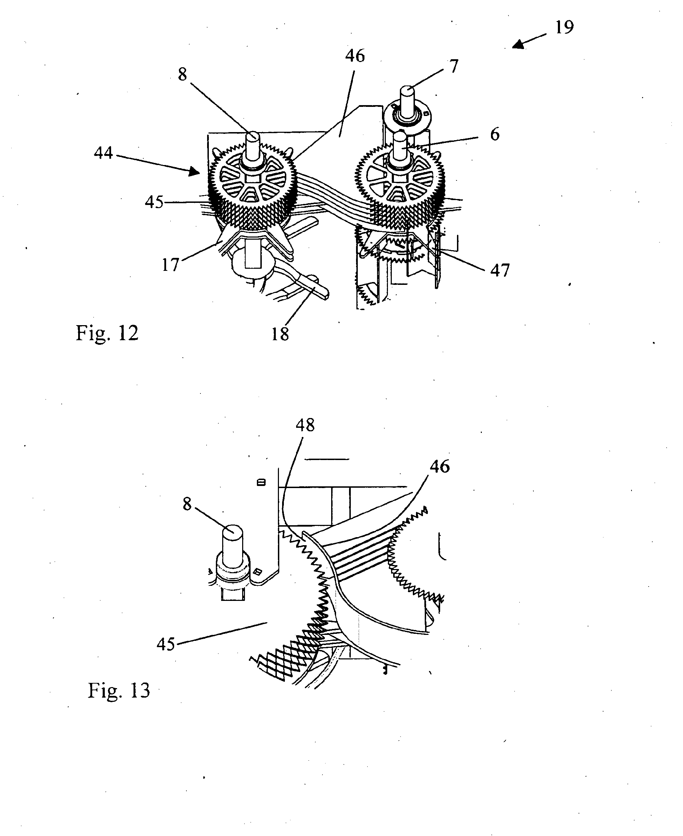

Aus Fig. 12 ist eine perspektivische Teilansicht einer Pflückvorrichtung 19 gemäß einer dritten Ausführungsform der Erfindung ersichtlich, wobei zu der ersten Ausführungsform ähnliche oder identische Merkmale mit denselben Bezugszeichen wie bei der ersten Ausführungsform bezeichnet sind. Die dritte Ausführungsform unterscheidet sich von der ersten Ausführungsform insbesondere dadurch, dass am oberen Ende der Einzugswalze 8 ein Zerkleinerer 44 angeordnet ist, der mehrere drehfest an der Einzugswalze 8 befestigte Zackenscheiben 45 und ein an der Halterung 3 befestigtes Leitelement 46 aufweist. Im oberen Bereich der Pflückwalze 6 ist mit dieser drehfest ein zweiter Mitnehmer 47 angeordnet, mittels welchem der obere Bereich des Stängels 33 entlang dem Leitelement 46 den Zackenscheiben 45 zugeführt und dann zwischen den Zackenscheiben 45 und dem Leitelement 46 zerkleinert werden kann. Das Leitelement 46 greift dabei insbesondere in zwischen den Zackenscheiben 45 ausgebildete Zwischenräume ein. Ferner ist der zweite Mitnehmer 47 drehfest mit der Pflückwalze 6 verbunden.

Gemäß einer aus Fig. 13 ersichtlichen Variante der dritten Ausführungsform ist es möglich, das zwischen dem Leitelement 46 und den Zackenscheiben 45 ein Spalt 48 vorgesehen ist, durch welchen hindurch der obere Teil des Stängels 33 führbar und dabei zerkleinerbar ist. Insbesondere ist es möglich, im Spalt 48 mehrere im Abstand zueinander angeordnete Vorsprünge vorzusehen, die in die Zwischenräume zwischen den Zackenscheiben 45 eingreifen.

Zwar ist der Mitnehmer 47 gemäß dieser Ausführungsform im Zusammenhang mit dem Zerkleinerer 44 erläutert worden, dennoch ist es möglich, auch bei allen anderen Ausführungsformen der Erfindung im oberen Endbereich der Pflückwalze 6 einen drehfest mit dieser verbundenen, zweiten Mitnehmer 47 vorzusehen. Der zweite Mitnehmer 47 kann insbesondere bei einem langen Stängel 33 der zusätzlichen Führung desselben dienen und ist unabhängig davon vorsehbar, ob ein Zerkleinerer 44 vorhanden ist. Ferner ist es möglich, an der Halterung 3 eine zweite Einzugsführung und/oder eine zweite Mitnehmerführung zu befestigen, die zwischen der Einzugswalze 8 und der Pflückwalze 6 angeordnet ist und im oberen Bereich der Einzugswalze 8 und der Pflückwalze 6 im Abstand zur (unteren) Einzugsführung 32 sitzt.

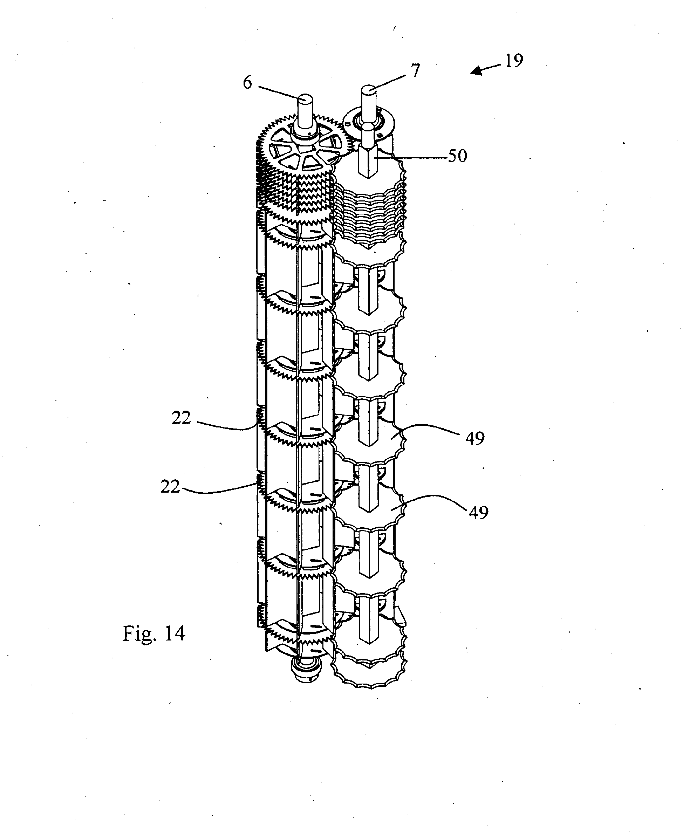

Aus Fig. 14 ist eine perspektivische Teilansicht einer Pflückvorrichtung 19 gemäß einer vierten Ausführungsform der Erfindung ersichtlich, wobei zu der ersten Ausführungsform ähnliche oder identische Merkmale mit denselben Bezugszeichen wie bei der ersten Ausführungsform bezeichnet sind. Die vierte Ausführungsform unterscheidet sich von der ersten Ausführungsform insbesondere dadurch, dass die Häckselmesser 23 durch Häckselmesser 49 ersetzt sind, die im Abstand zueinander drehfest an einer drehbar an der Halterung 3 gelagerten Messerwalze 50 befestigt sind. Die Drehachse der Messerwalze 15 ist parallel zur Drehachse der Pflückwalze 6 ausgerichtet, wobei die Messer 49 axial versetzt zu den Zackenscheiben 22 angeordnet und als mit diesen überlappende Scheiben ausgebildet sind.

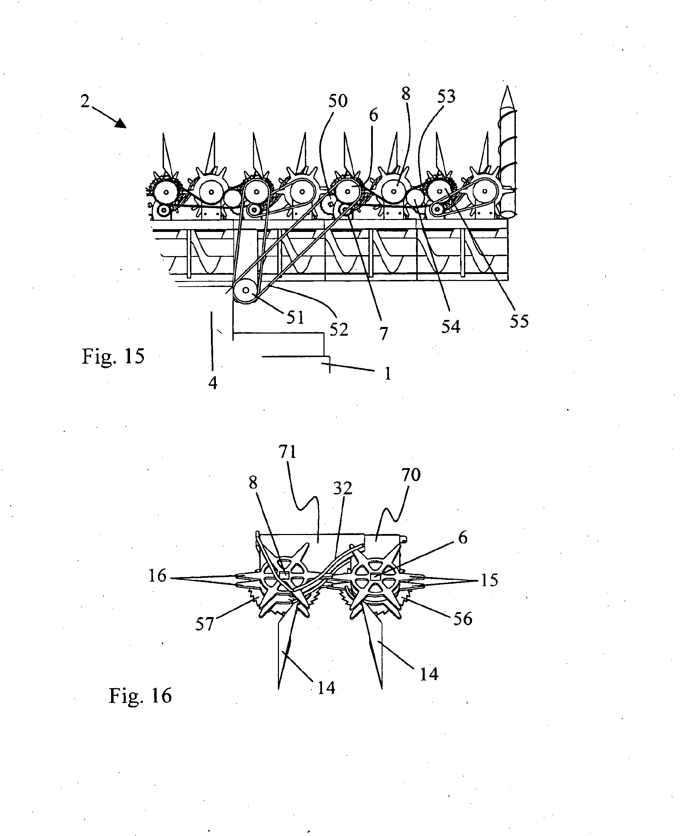

Aus Fig. 15 ist eine teilweise Draufsicht auf einen Pflückvorsatz 2 gemäß der vierten Ausführungsform mit mehreren Pflückvorrichtungen 19 und Antriebselementen ersichtlich, so dass das Antriebskonzept der Walzen 6, 7 und 8 verdeutlicht wird. Von einem Antriebsrad 51 erstreckt sich ein Riemen 52 bis zur Pflückwalze 6 und treibt diese an. Von der Pflückwalze 6 erstreckt sich ein Riemen 53 unter Zwischenschaltung der Einzugswalze 8 und eines Zwischenrads 54 bis hin zu einer zweiten Pflückwalze 55 einer benachbarten Pflückvorrichtung, so dass die Einzugswalze 8 und die zweite Pflückwalze 55 angetrieben werden können. Da die Hilfswalze 7 mit der Pflückwalze 6 über die Stirnräder 20 und 21 in Eingriff steht, kann auch die Hilfswalze 7 angetrieben werden. Somit ist es möglich, die Pflückwalze 6, die Hilfswalze 7 und die Einzugswalze 8 mittels des Antriebsrads 51 anzutreiben. Ferner sind weitere Riemen und/oder Verzahnungen vorgesehen, um die anderen Walzen anzutreiben. Zum Antreiben des nicht in dieser Fig. dargestellten Teils des Pflückvorsatzes 2 kann wenigstens ein zusätzliches Antriebsrad vorgesehen sein.

Obwohl das in Fig. 15 gezeigte Antriebskonzept anhand der vierten Ausführungsform erläutert wurde, ist es auf alle anderen Ausführungsformen übertragbar. Ferner ist dieses Antriebskonzept lediglich beispielhaft, so dass es durch andere Antriebe, Riementriebe und/oder Getriebe ersetzt oder ergänzt werden kann.

Aus Fig. 16 ist eine perspektivische Ansicht von Mitnehmern 15 und Einzugselementen 16 gemäß einer fünften Ausführungsform der Erfindung ersichtlich, wobei zu der ersten Ausführungsform ähnliche oder identische Merkmale mit denselben Bezugszeichen wie bei der ersten Ausführungsform bezeichnet sind. Anstelle der bei der ersten Ausführungsform vorgesehenen, starr an der Halterung 3 befestigten Messer 39 und 40, ist gemäß der fünften Ausführungsform am unteren Ende der Pflückwalze 6 ein Messer 56 unter Zwischenschaltung eines Getriebes 70 mit der Pflückwalze 6 verbunden, und am unteren Ende der Einzugswalze 8 ist ein Messer 57 unter Zwischenschaltung eines Getriebes 71 mit der Einzugswalze 8 verbunden. Die Messer 56 und 57 sind scheibenförmig ausgebildet und übernehmen die Aufgaben der Messer 39 und 40 gemäß der ersten Ausführungsform.

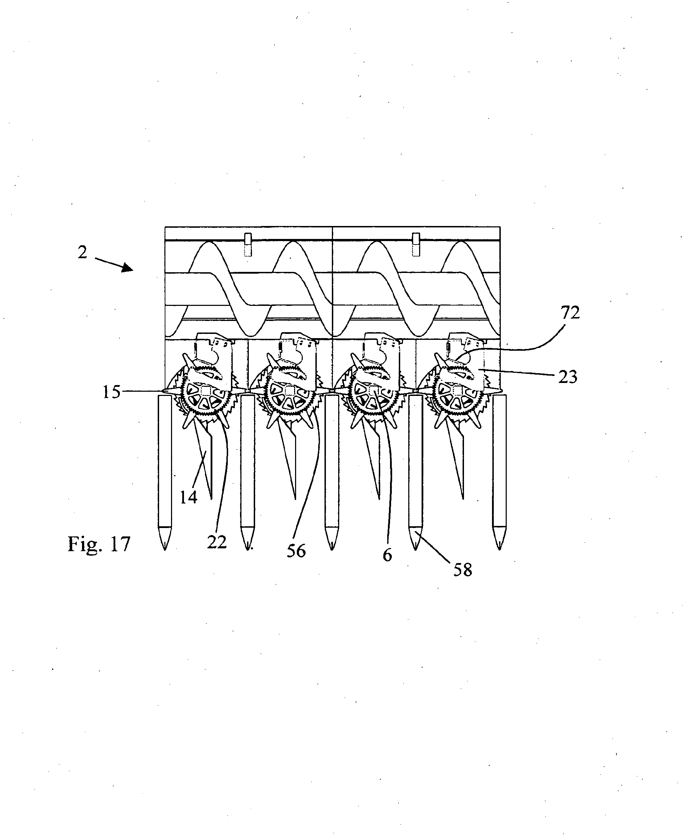

Aus Fig. 17 ist eine Draufsicht auf einen Pflückvorsatz 2 gemäß'einer sechsten Ausführungsform ersichtlich, wobei zu der ersten Ausführungsform ähnliche oder identische Merkmale mit denselben Bezugszeichen wie bei der ersten Ausführungsform bezeichnet sind. Im Gegensatz zur ersten Ausführungsform ist jede Pflückvorrichtung 19 aber von lediglich einer einzigen Pflückwalze 6 gebildet, so dass die Hilfswalzen und die Einzugswalzen entfallen. Ferner sind die Messer 39 und 40 gemäß der ersten Ausführungsform durch mit der Pflückwalze 6 verbundene Messer 56, entsprechend der fünften Ausführungsform, ersetzt. Zusätzlich sind fest an der Halterung 3 befestigte Teilerspitzen 58 vorgesehen, die zwischen den Pflückwalzen 6 bzw. den Pflückvorrichtungen 19 angeordnet sind und sich in Fahrrichtung 10 länger von dem Erntefahrzeug 1 wegerstrecken als die Teilerspitzen 14. Die Mitnehmer 15 von zwei benachbarten Pflückwalzen 6 sind axial zueinander versetzt angeordnet und können einander überlappen. Entsprechendes gilt für obere Mitnehmer 47, die optional vorhanden sein können. Die Pflückwalzen 6 sind jeweils von einer Teilummantelung 72 teilweise umgeben, mit deren Hilfe der oder die Stängel 33 durch den jeweiligen Pflückspalt 30 geführt werden.

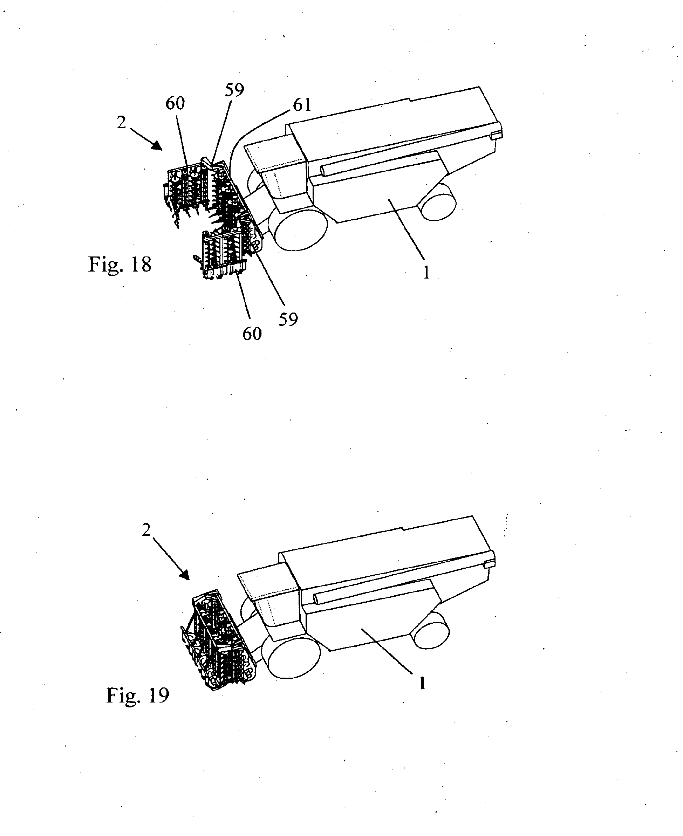

Aus Fig. 18 ist eine perspektivische Ansicht des Erntefahrzeugs 1 ersichtlich, wobei die Halterung bzw. der Rahmen 3 des Pflückvorsatzes 2 Gelenke 59 aufweist, mittels welchen der Rahmen 3 bzw. der Pflückvorsatz 2 zusammengeklappt werden kann. Gemäß Fig. 18 sind zwei Rahmenflügel 60 mit jeweils zwei Pflückvorrichtungen 19 gegenüber dem Restrahmen 61 um 90° geschwenkt dargestellt. Dabei sind die Rahmenflügel 60 mit dem Restrahmen 61 über die Gelenke 59 verbunden.

Aus Fig. 19 ist der Pflückvorsatz 2 im vollständig zusammengeklappten Zustand ersichtlich. Da der Pflückvorsatz 2 in diesem Zustand eine geringere seitliche Erstreckung als im ausgeklappten Zustand aufweist, kann das Erntefahrzeug 1 z.B. eine öffentliche Straße benutzen oder eine Einfahrt beschränkter Breite passieren, ohne dass der Pflückvorsatz demontiert werden muss.

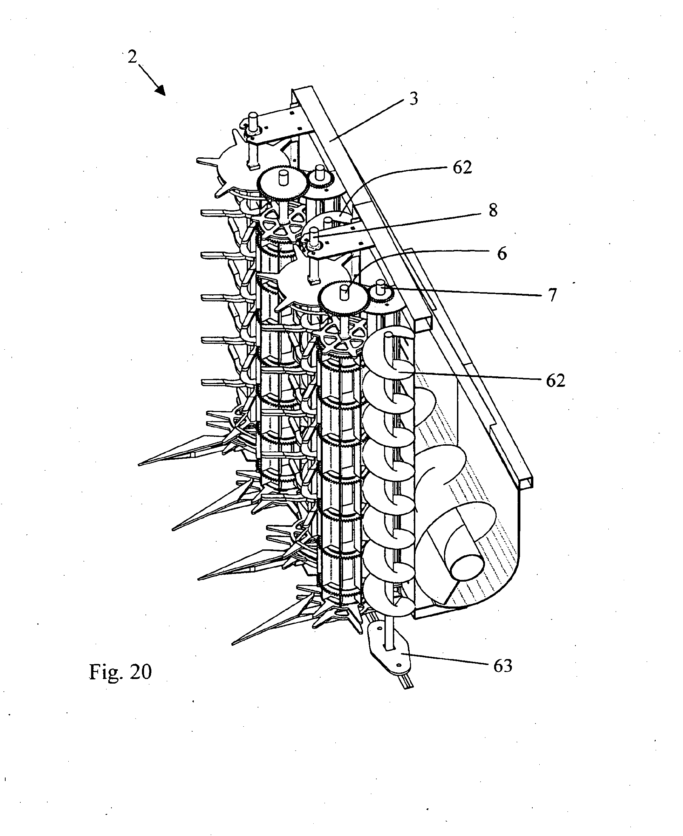

Aus Fig. 20 ist eine perspektivische Ansicht eines Pflückvorsatz 2 gemäß einer siebten Ausführungsform ersichtlich, wobei zu der ersten Ausführungsform ähnliche oder identische Merkmale mit denselben Bezugszeichen wie bei der ersten Ausführungsform bezeichnet sind. Jede Pflückvorrichtung 19 weist im Vergleich zur ersten Ausführungsform zusätzlich eine an der Halterung 3 drehbar gelagerte Transportschnecke 62 auf, deren Drehachse parallel zur Drehachse der Pflückwalze 6 ausgerichtet ist. Die seitlich von der Pflückwalze 6 und von der Hilfswalze 7 ausgeworfenen zerkleinerten bzw. gehäckselten Teile des Stängels 33 können mittels der Transportschnecke 62 nach unten abgeführt werden. Ferner ist an dem dem Erdboden 9 zugewandten Ende oder Endbereich der Schnecke 62 ein mit dieser drehfest verbundener Verteilschlegel 63 angeordnet, mittels welchem Reststoppel zerkleinerbar und/oder Pflanzenreste gezielt verteilbar sind.

Jede der Ausführungsformen, kann zusätzlich mit einer Transportschnecke und/oder einem Verteilschlegel ausgestattet sein, wobei letzterer auch unabhängig von der Transportschnecke drehbar an der Halterung gelagert sein kann.

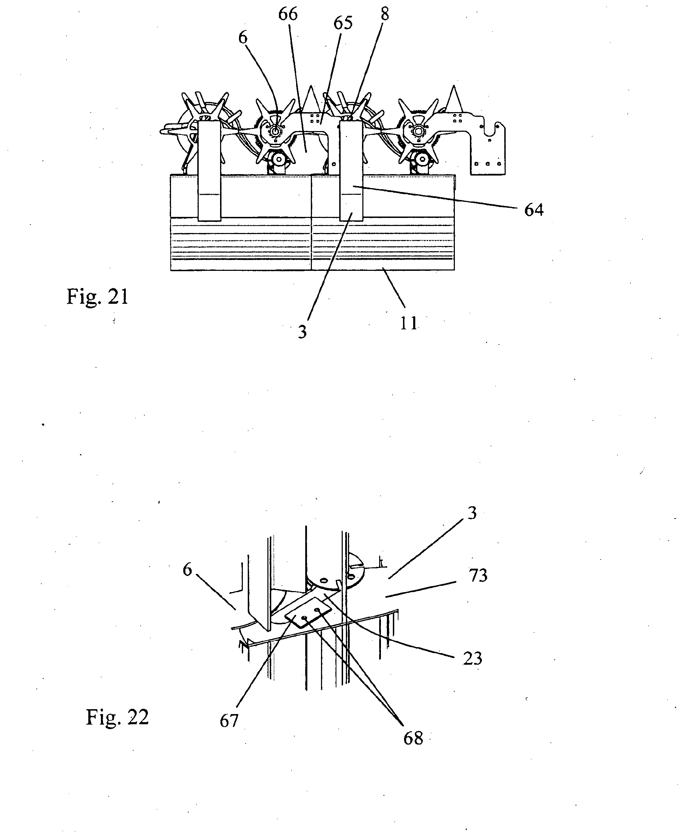

Aus Fig. 21 ist eine teilweise Unteransicht eines Pflückvorsatzes 2 gemäß einer achten Ausführungsform ersichtlich, wobei zu der ersten Ausführungsform ähnliche oder identische Merkmale mit denselben Bezugszeichen wie bei der ersten Ausführungsform bezeichnet sind. Im Gegensatz zu der ersten Ausführungsform weist der Pflückvorsatz 2 gemäß der achten Ausführungsform keine Häckselmesser und keine Trennmesser auf. Der Stängel 33 kann vielmehr mit der im Erdboden 9 sitzenden Wurzel der Pflanze 34 verbunden bleiben und wird nach dem Durchführen durch den Pflückspalt 30 lediglich niedergelegt. Die Einzugswalzen 8 und die Pflückwalzen 6 sind über Abstandshalter 65 mit der Halterung 3 verbunden, so dass zwischen der Pflückwalze 6 und der Halterung 3 bzw. dem Trog 11 ein Freiraum 66 ausgebildet ist, in den der Stängel 33 nach dem Durchführen durch den Pflückspalt 30 von der Pflückwalze 6 und der Hilfswalze 7 eingebracht und dann durch das nachrückende Erntfahrzeug 1 in Fahrtrichtung 10 niedergelegt wird. Ferner sind Auflaufkufen 64 an der Unterseite des Trogs 11 vorgesehen.

Somit kann der Antrieb für den Pflückvorsatz bzw. für die Pflückvorrichtungen kleiner und kostengünstiger ausfallen, da die für das Häckseln erforderliche Leistung nicht aufgebracht werden muss.

Fig. 22 zeigt beispielhaft eines der Häckselmesser 23, welches mittels eines Klingenhalters 67 an der Halterung 3 über Schrauben 68 festgeklemmt ist. Dies ermöglicht in einfacher Weise ein Lösen bzw. einen Austausch des Häckselmessers 23, wenn dieses verschlissen ist.

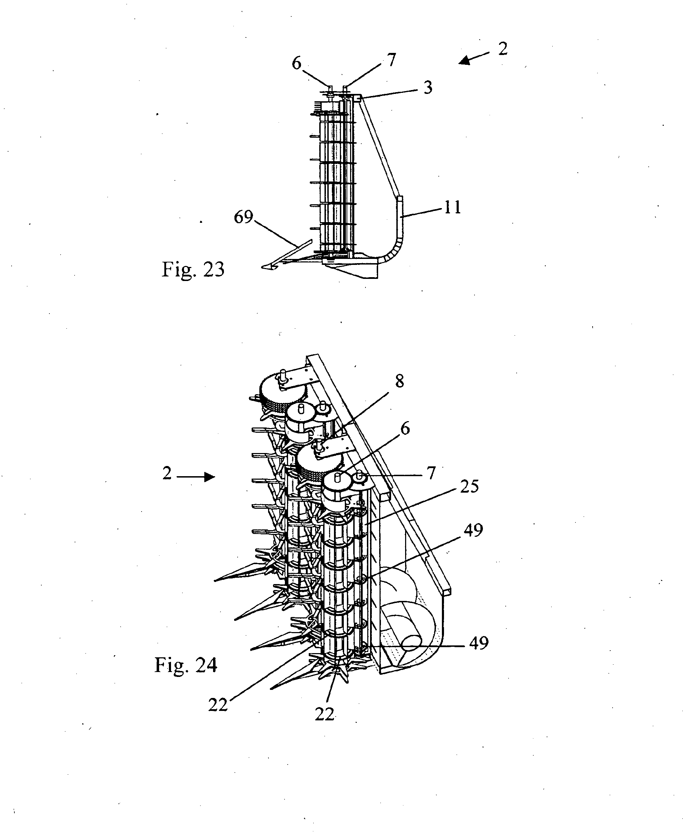

Aus Fig. 23 ist eine Seitenansicht eines Pflückvorsatzes 2 gemäß einer neunten Ausführungsform der Erfindung ersichtlich, wobei zu der ersten Ausführungsform ähnliche oder identische Merkmale mit denselben Bezugszeichen wie bei der ersten Ausführungsform bezeichnet sind. Die neunte Ausführungsform unterscheidet sich von der ersten Ausführungsform dadurch, dass an dem Pflückvorsatz 2, insbesondere an einer der Teilerspitzen 14, wenigstens ein Heber (Lagermaisheber) 69 befestigt ist, der sich in Fahrtrichtung 10 von der Halterung 3 wegerstreckt und mit abnehmendem Abstand zur Halterung 3 einen zunehmenden Abstand zum Erdboden 9 aufweist. Mit Hilfe des Hebers 69 ist es möglich, liegende Pflanzen anzuheben, so dass deren Stängel der Pflückwalze 6 oder Einzugswalze 8 zum Ernten der Früchte zugeführt werden können.

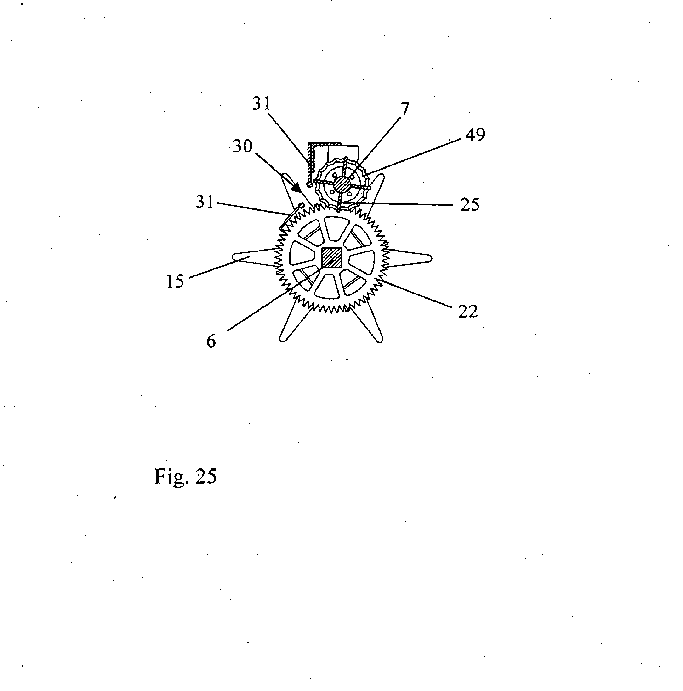

Aus Fig. 24 ist eine perspektivische Teilansicht eines Pflückvorsatzes 2 gemäß einer zehnten Ausführungsform der Erfindung ersichtlich, wobei zu der ersten Ausführungsform ähnliche oder identische Merkmale mit denselben Bezugszeichen wie bei der ersten Ausführungsform bezeichnet sind. Die zehnte Ausführungsform unterscheidet sich von der ersten Ausführungsform insbesondere dadurch, dass die Häckselmesser 23 durch Häckselmesser 49 ersetzt sind, die im Abstand zueinander drehfest an der Hilfswalze 7 befestigt sind. In diesen Abständen können die Förderelemente bzw. Lamellen 25 angeordnet sein. Ferner sind die Messer 49 axial versetzt zu den Zackenscheiben 22 angeordnet und als mit diesen überlappende Scheiben ausgebildet. Eine Schnittansicht durch die Pflückwalze 6 und die Hilfswalze 7 nach Fig. 24 zeigt Fig. 25.

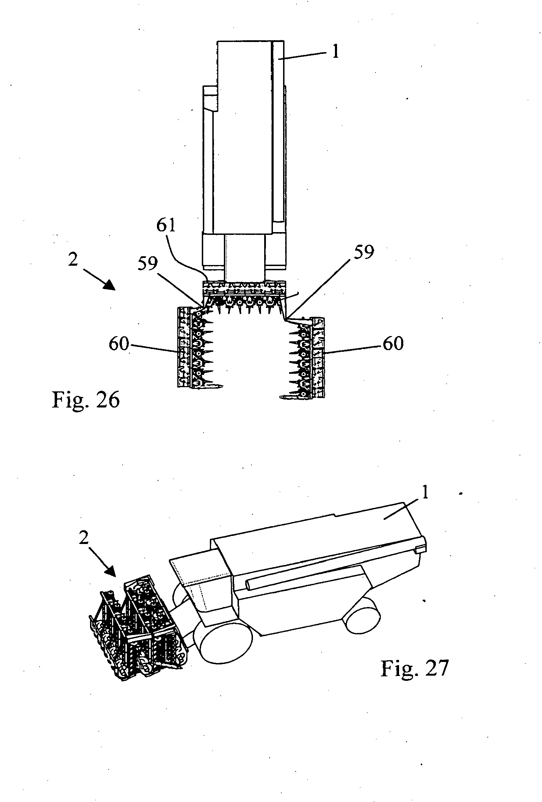

Aus den Fig. 26 und 27 ist eine perspektivische Ansicht eines Erntefahrzeugs 1 mit einem Pflückvorsatz 2 gemäß einer elften Ausführungsform der Erfindung ersichtlich, wobei zu der ersten Ausführungsform ähnliche oder identische Merkmale mit denselben Bezugszeichen wie bei der ersten Ausführungsform bezeichnet sind. Im Vergleich zur ersten Ausführungsform sind mehr Pflückvorrichtungen 19 am Rahmen 3 befestigt, bei dem ein alternatives Klappkonzept realisiert ist. Die Gelenke 59 sind in Fahrtrichtung gesehen zueinander versetzt angeordnet, so dass es möglich ist, die schwenkbaren Rahmenflügel 60 übereinander zu klappen bzw. einander überlappend anzuordnen.

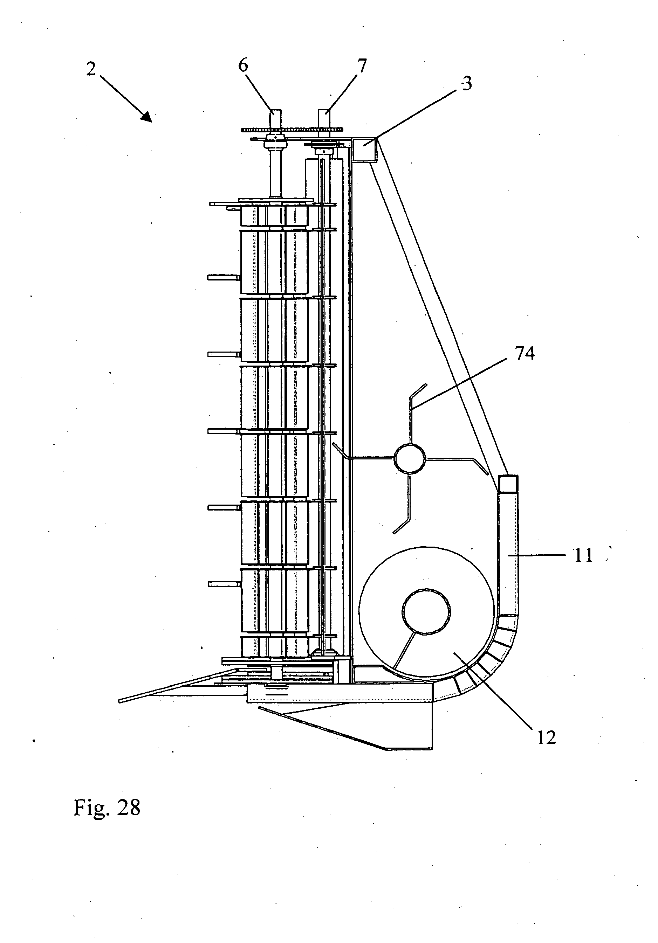

Aus Fig. 28 ist eine Seitenansicht eines Pflückvorsatzes 2 gemäß einer zwölften Ausführungsform der Erfindung ersichtlich, wobei zu der ersten Ausführungsform ähnliche oder identische Merkmale mit denselben Bezugszeichen wie bei der ersten Ausführungsform bezeichnet sind. Die zwölfte Ausführungsform unterscheidet sich von der ersten Ausführungsform insbesondere dadurch, dass eine querliegende Häckselwalze 74 vorgesehen ist, die insbesondere drehbar an der Halterung 3 gelagert ist. Mittels der Häckselwalze 74 können Reststängel aufgesammelt, gehäckselt, zusammengeführt und/oder entgegen der Fahrtrichtung 10 abgeführt werden. Bevorzugt ist die Häckselwalze 74 in Fahrtrichtung 10 gesehen hinter dem Pflückspalt 30 bzw. hinter den Walzen 6, 7 und/oder 8 angeordnet.

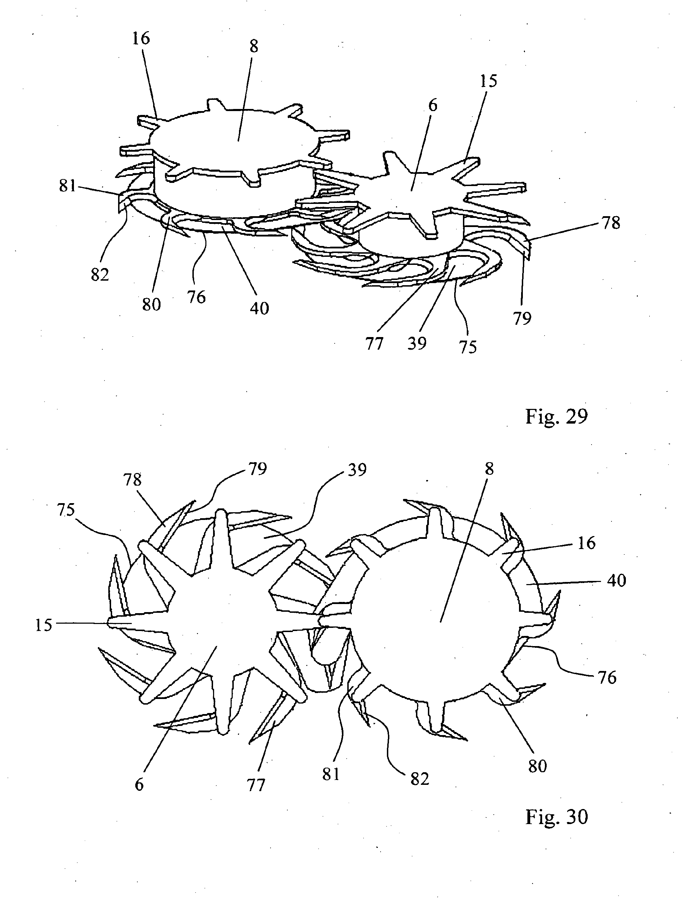

Aus Fig. 29 ist eine perspektivische Darstellung der Mitnehmer 15 und der Einzugselemente 16 gemäß einer Abwandlung der ersten Ausführungsform ersichtlich, wobei die an der Halterung 3 befestigten Trennmesser 39 und 40 jeweils als kreisförmige oder teilkreisförmige Scheibe ausgebildet sind, an deren Außenumfang eine Schneide 75 bzw. 76 vorgesehen ist. Der untere Mitnehmer ist als Greif-Schneidrad 77 ausgebildet und weist mehrere abgewinkelte oder gekrümmte Finger 78 auf, die jeweils mit einer Schneide 79 versehen sind. Wird ein Stängel 33 von einem der Finger 78 erfasst, so kann der Stängel 33 gegen die Schneide 75 geführt und scherenförmig abgeschnitten werden. Nach dem Abschneiden kann der Stängel 33 auf der Scheibe 39 aufstehend mittels des Fingers 78 und des oberen Mitnehmers 15 in Richtung des Pflückspalts 30 geführt werden. Ferner ist das untere Einzugselement als Greif-Schneidrad 80 ausgebildet und weist mehrere abgewinkelte oder gekrümmte Finger 81 auf, die jeweils mit einer Schneide 82 versehen sind. Wird ein Stängel 33 von einem der Finger 81 erfasst, so kann der Stängel 33 gegen die Schneide 76 geführt und scherenförmig abgeschnitten werden. Nach dem Abschneiden kann der Stängel 33 auf der Scheibe 40 aufstehend mittels des Fingers 81 und des oberen Einzugselements 16 in Richtung der Pflückwalze 6 geführt werden. Fig. 30 zeigt eine Draufsicht auf die Anordnung nach Fig. 29.

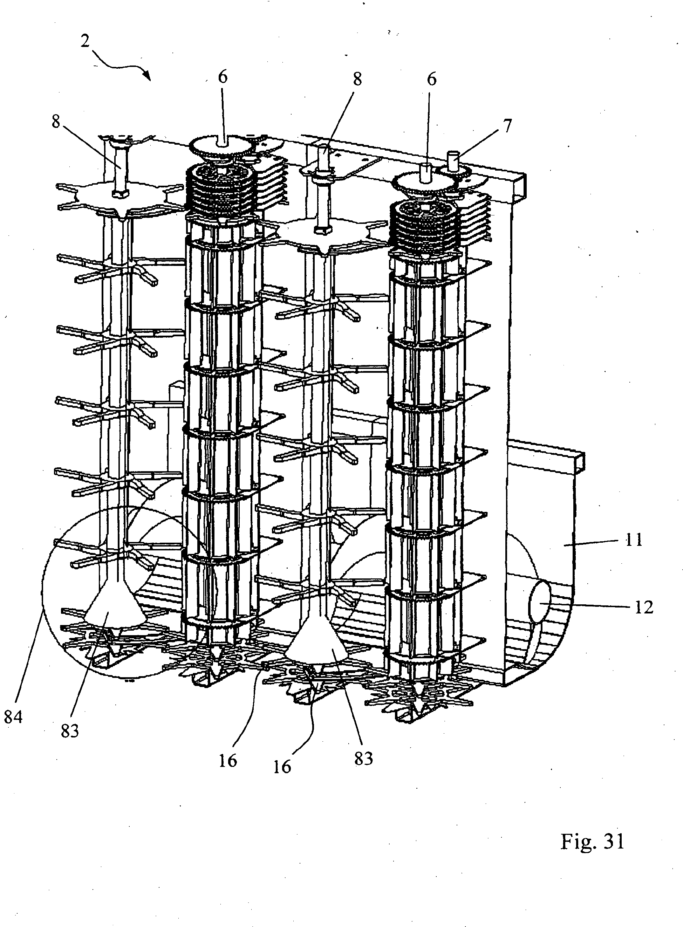

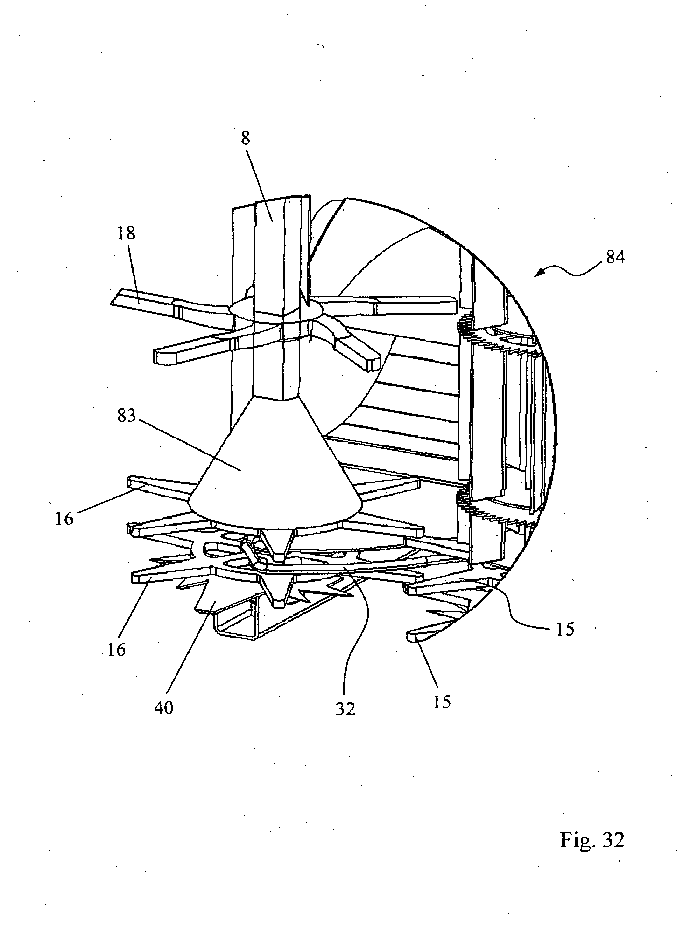

Aus Fig. 31 ist eine perspektivische Ansicht des Pflückvorsatzes 2 gemäß einer Abwandlung der ersten Ausführungsform ersichtlich, wobei die Einzugswalze 8 an ihrem dem Erdboden 9 zugewandten Endbereich 83 oberhalb der Einzugselemente 16 konisch oder kegelstumpfförmig ausgebildet ist. Dabei vergrößert sich der Durchmesser des Konus oder Kegelstumpfs mit abnehmendem Abstand zu den Einzugselementen 16 bzw. zum Erdboden 9. Wenn eine vom Stängel 33 abgetrennte Frucht 36 mit geringem Abstand zur Drehachse der Einzugswalze 8 herunterfällt, wird die Frucht 36 mittels des Konus oder Kegelstumpfs in den Bereich der radial äußeren Enden der Einzugselemente 16 geführt, so dass die Frucht 36 sicher nach hinten in Richtung der Förderschnecke 12 bzw. des Trogs 11 geführt werden kann. Fig. 32 zeigt eine vergrößerte Ansicht des in Fig. 31 gekennzeichneten Ausschnitts 84.

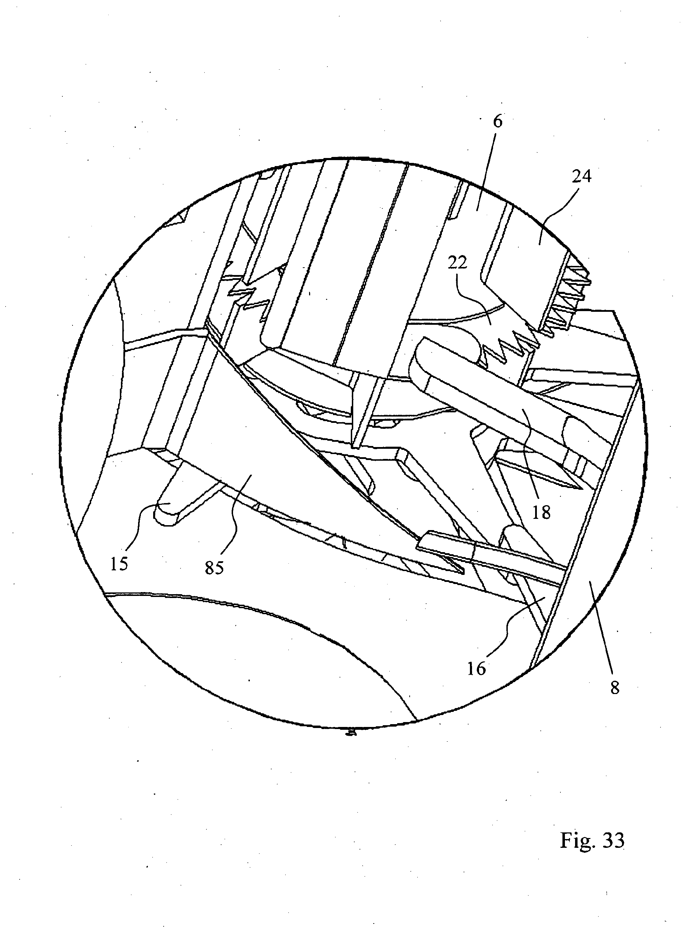

Aus Fig. 33 ist eine perspektivische Teilansicht einer Pflückvorrichtung oder einer der Pflückvorrichtungen 19 gemäß einer Abwandlung der ersten Ausführungsform ersichtlich, wobei an der Halterung 3 im Bereich zwischen der Pflückwalze 6 und der Einzugswalze 8 ein Leitblech 85 befestigt ist, welches in einer Richtung von der Einzugswalze 8 bis zur Pflückwalze 6 nach oben geneigt ist bzw. schräg nach oben verläuft und sich bogenförmig um die Pflückwalze 6 auf den Pflückspalt 30 zu erstreckt. Das Leitblech 85 verhindert, dass eine vom Stängel 33 abgetrennte Frucht 36 wieder zurück in Richtung Pflückspalt 30 fallen kann. Entlang der Längsachse der Pflückwalze 6 oder des.Pflückspalts 30 können mehrere solcher Leitbleche 85 an der Halterung 3 im Abstand zueinander angeordnet sein.

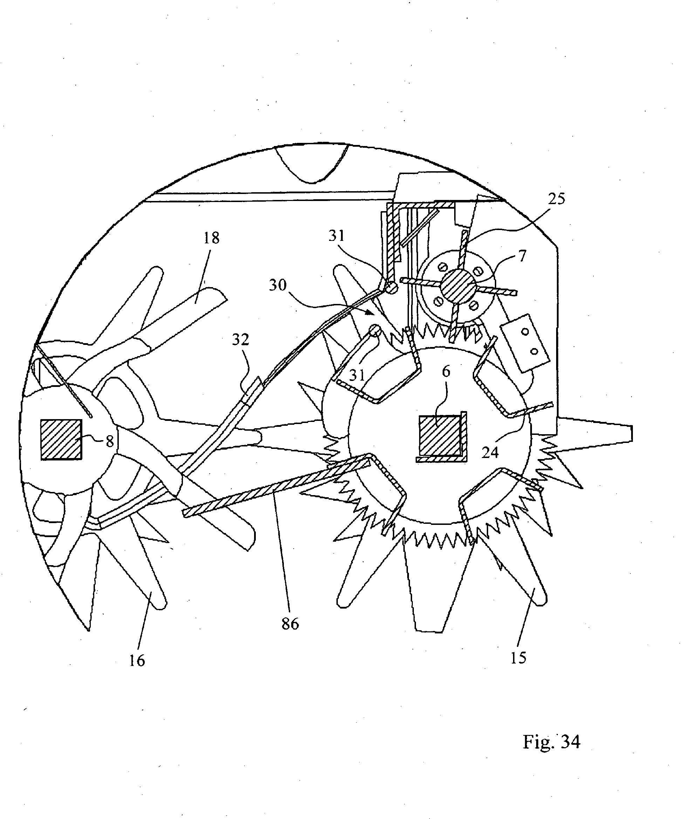

Aus Fig. 34 ist eine Schnittansicht durch eine Pflückvorrichtung oder eine der Pflückvorrichtungen 19 gemäß einer Abwandlung der ersten Ausführungsform ersichtlich, wobei an den Lamellen 24 der Pflückwalze 6 wenigstens ein elastischer Finger 86 befestigt ist, der sich radial oder in etwa radial von der Pflückwalze 6 wegerstreckt. Der Übersichtlichkeit halber ist hier lediglich ein elastischer Finger 86 dargestellt. Rings der Drehachse der Pflückwalze 6 können aber mehrere solcher elastische Finger vorgesehen sein, die insbesondere gleichartig ausgebildet sind. Ferner können mehrere solcher elastische Finger entlang der Drehachse der Pflückwalze im Abstand zueinander angeordnet sein. Der wenigstens eine oder die elastischen Finger 86 erleichtern das Annehmen des Stängels 33 bzw. der Pflanze 34 über die gesamte Länge. Dabei erstreckt sich der elastische Finger 86 von der Pflückwalze 6 weg über eine Länge, die größer als der Abstand zwischen der Pflückwalze 6 und dem Pflückspalt 30 ist, so dass sich der elastische Finger 86 am Pflückspalt 30 bzw. an dessen Rändern oder Seitenelementen 31 abbiegt, wenn er daran vorbei geführt wird. Nach dem Abbiegen nimmt der elastische Finger 86 selbsttätig wieder sein Form vor dem Abbiegen an, so dass der elastische Finger 86 insbesondere aus einem federelastischen Material besteht. Bevorzugt ist der elastische Finger 86 aus einem elastischen oder federelastischen Kunststoff wie z.B. Polyurethan (PUR) hergestellt.

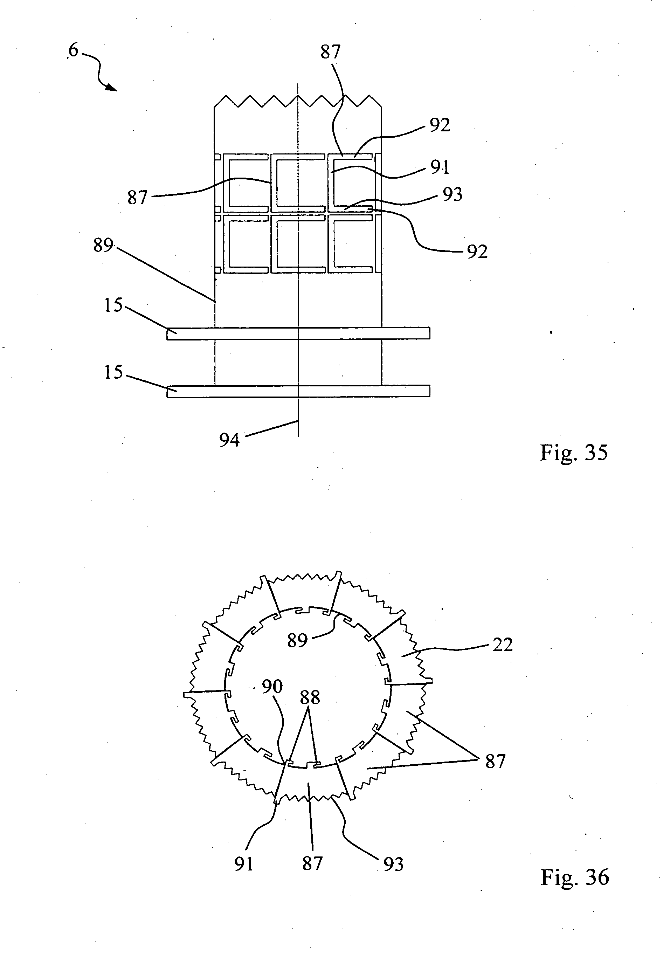

Aus Fig. 35 ist eine schematische und seitliche Teilansicht einer Pflückwalze 6 gemäß einer Abwandlung der ersten Ausführungsform ersichtlich, wobei die Zackenscheiben 22 und die Lamellen 24 aus U-förmigen Segmenten 87 zusammengesetzt sind, die rings der Drehachse 94 der Pflückwalze 6 angeordnet sind. Fig. 36 zeigt eine schematische Schnittansicht durch diese Pflückwalze 6. Die Segmente 87 sind mittels eines Steck-Klemm-Mechanismus mit dem als Rohr ausgebildeten Walzenkörper 89 verbunden und weisen Steckfüße 88 auf, die sich durch im Walzenkörper 89 vorgesehene Schlitze 90 hindurch erstrecken und den Walzenkörpers 89 bzw. dessen Wand hintergreifen. Die über einen Rücken 91 miteinander verbundenen Schenkel 92 der U-förmigen Segmente 87 sind mit Zacken 93 versehen, sodass die rings der Drehachse 94 der Pflückwalze 6 angeordneten Segmente 87 die Zackenscheiben 22 bilden, zwischen denen die Rücken 91 angeordnet sind, welche die Lamellen 24 bilden. Die Rücken 91 können als Reißkanten ausgebildet sein, die im Vergleich zu den Schenkeln 92 radial verlängert sind.

Die beschriebenen Ausführungsformen stellen keine Einschränkung der Erfindung dar. Insbesondere sind die Merkmale aller Ausführungsformen grundsätzlich frei miteinander kombinierbar.

### Bezugszeichenliste

1 Erntefahrzeug
2 Pflückvorsatz
3 Halterung / Rahmen
4 Schrägförderer
5 Sammelbehälter
6 Pflückwalze
7 Hilfswalze
8 Einzugswalze
9 Erdboden
10 Fahrtrichtung
11 Trog
12 Förderschnecke
13 Pflanzenführung
14 Teilerspitze
15 Mitnehmer .
16 Einzugselement
17 Einzugselement
18 Zwischenelement
19 Pflückvorrichtung
20 Stirnrad
21 Stirnrad
22 Zackenscheibe
23 Häckselmesser
24 Lamelle
25 Lamelle
26 Zwischenraum
27 Zerkleinerer
28 Zackenscheibe
29 Messer
30 Pflückspalt
31 Blech / Rand
32 Einzugsführung
33 Pflanzenstängel
34 Pflanze
35 Breite des Pflückspalts
36 Frucht
37 Bogenführung
38 Bogenführung
39 Messer
40 Messer
41 Messerklinge
42 Reißkante
43 Spleißelement
44 Zerkleinerer
45 Zackenscheibe
46 Leitelement
47 Mitnehmer
48 Spalt
49 Häckselmesser
50 Messerwalze
51 Antriebsrad
52 Riemen
53 Riemen
54 Zwischenrad
55 Pflückwalze
56 Messer
57 Messer
58 Teilerspitze
59 Gelenk
60 Rahmenflügel
61 Restrahmen
62 Transportschnecke
63 Verteilschlegel
64 Auflaufkufe
65 Halterung
66 Freiraum
67 Klingenhalter
68 Schraube
69 Heber
70 Getriebe
71 Getriebe
72 Teilummantelung
73 Randhalterung
74 Häckselwalze
75 Schneide
76 Schneide
77 Greif-Schneidrad
78 Finger
79 Schneide
80 Greif-Schneidrad
81 Finger
82 Schneide
83 konischer Bereich der Einzugswalze
84 Ausschnitt
85 Leitblech
86 elastischer Finger
87 Segment
88 Steckfuß
89 Walzenkörper
90 Schlitz
91 Rücken
92 Schenkel
93 Zacken
94 Drehachse

## Patentansprüche

1. Pflückvorrichtung zum Pflücken wenigstens einer an einem länglichen Stängel (33) einer Pflanze (34) sitzenden Frucht (36), mit
- einer entlang des Erdbodens (9) bewegbaren Halterung (3) und
- einem an der Halterung (3) vorgesehenen und von seitlichen Rändern (31) begrenzten, länglichen Pflückspalt (30), durch den hindurch der Stängel (33) unter Abtrennen der Frucht (36) an den Rändern (31) ohne die Frucht (36) führbar ist,
**dadurch gekennzeichnet, dass**
- der Pflückspalt mit seiner Längsachse vertikal oder im Wesentlichen vertikal zum Erdboden (9) ausgerichtet ist.

2. Pflückvorrichtung nach Anspruch 1, **dadurch gekennzeichnet, dass** der Stängel (33) mit seiner Längsachse parallel oder im Wesentlichen parallel zu der Längsachse des Pflückspalts (30) ausgerichtet dem Pflückspalt (30) zuführbar ist.

3. Pflückvorrichtung nach Anspruch 1 oder 2, **dadurch gekennzeichnet, dass** an der Halterung (3) wenigstens ein Mitnehmer (15) bewegbar geführt ist, mittels welchem der Stängel (33) erfassbar und mit seiner Längsachse parallel oder im Wesentlichen parallel zu der Längsachse des Pflückspalts (30) ausgerichtet dem Pflückspalt (30) zuführbar ist.

4. Pflückvorrichtung nach Anspruch 3, **dadurch gekennzeichnet, dass** der Stängel (33) mittels des Mitnehmers (15) durch den Pflückspalt (30) hindurch führbar ist.

5. Pflückvorrichtung nach Anspruch 3 oder 4, **dadurch gekennzeichnet, dass** der Mitnehmer (15) an einer drehbar an der Halterung (3) gelagerten Pflückwalze (6) befestigt ist, deren Drehachse parallel zur Längsachse des Pflückspalts (30) ausgerichtet ist.

6. Pflückvorrichtung nach Anspruch 5, **dadurch gekennzeichnet, dass** die Pflückwalzen (6) in Bewegungsrichtung (10) der Pflückvorrichtung (2) gesehen, neben oder vor dem Pflückspalt (30) angeordnet ist.

7. Pflückvorrichtung nach Anspruch 5 oder 6, **dadurch gekennzeichnet, dass** der Mitnehmer (15) sich radial zur Drehachse der Pflückwalze (6) erstreckt und der Abstand zwischen der Drehachse der Pflückwalze (6) und einem radial äußeren Ende oder Endbereich des Mitnehmers (15) größer oder gleich dem Abstand zwischen der Drehachse der Pflückwalze (6) und dem Pflückspalt (30) ist.

8. Pflückvorrichtung nach einem der Ansprüche 5 bis 7, **dadurch gekennzeichnet, dass** entlang der Drehachse der Pflückwalze (6) mehrere Förderelemente (22, 24) im Abstand zueinander an der Pflückwalze (6) angeordnet sind, mittels welchen der durch den Pflückspalt (30) hindurch geführte Stängel (33) oder Teile davon vom Pflückspalt (30) weg förderbar ist.

9. Pflückvorrichtung nach Anspruch 8, **dadurch gekennzeichnet, dass** die Förderelemente Zackenscheiben (22) und/oder Lamellen (24) umfassen.

10. Pflückvorrichtung nach.einem der Ansprüche 5 bis 9, **dadurch gekennzeichnet, dass** an der Halterung (3) wenigstens eine Hilfswalze (7) drehbar gelagert ist, deren Drehachse parallel zur Längsachse des Pflückspalts (30) ausgerichtet ist, wobei mehrere Förderelemente (25) im Abstand zueinander an der Hilfswalze, (7) angeordnet sind, mittels welchen der durch den Pflückspalt (30) hindurch geführte Stängel oder Teile davon vom Pflückspalt (30) weg förderbar ist.

11. Pflückvorrichtung nach den Ansprüchen 9 und 10, **dadurch gekennzeichnet, dass** die Förderelemente der Hilfswalze (7) Lamellen (25) umfassen, die in Zwischenräume (26) zwischen den Lamellen (24) der Pflückwalze (6) eingreifen können.

12. Pflückvorrichtung nach Anspruch 11, **dadurch gekennzeichnet, dass** in den Zwischenräumen (26) als Reißkanten ausgebildete Vorsprünge (42) an der Pflückwalze (6) befestigt sind.

13. Pflückvorrichtung nach einem der Ansprüche 10 bis 12, **dadurch gekennzeichnet, dass** die Pflückwalze (6) und die Hilfswalze (7) mit relativ zueinander unterschiedlichen Umfangsgeschwindigkeiten drehen oder drehbar sind.

14. Pflückvorrichtung nach einem der Ansprüche 5 bis 13, **dadurch gekennzeichnet, dass** entlang einer parallel zur Längsachse des Pflückspalts (30) ausgerichteten Achse mehrere Spleißelemente (43) im Abstand zueinander an der Halterung (3) befestigt sind, wobei der Stängel (33) oder Teile davon zwischen den Spleißelementen (43) und der Pflückwalze (6) hindurch führbar und dabei aufspleißbar sind.

15. Pflückvorrichtung nach einem der Ansprüche 5 bis 14, **dadurch gekennzeichnet, dass** an der Pflückwalze (6) wenigstens eine durchgehende oder in mehrere Stücke unterteilte Pflückleiste vorgesehen ist, die sich parallel zur Drehachse der Pflückwalze (6) erstreckt oder in Richtung der Drehachse der Pflückwalze (6) spiralförmig um die Drehachse der Pflückwalze (6) herum verläuft.

16. Pflückvorrichtung nach den Ansprüchen 9 und 15, **dadurch gekennzeichnet, dass** die wenigstens eine Pflückleiste durch die Lamellen (24) der Pflückwalze (6) gebildet ist.

17. Pflückvorrichtung nach einem der Ansprüche 5 bis 16, **dadurch gekennzeichnet, dass** an einem dem Erdboden (9) zugewandten Ende oder Endbereich der Pflückwalze (6) wenigsten ein Trennmesser (56) befestigt ist, mittels welchem der Stängel (33) von der Wurzel der Pflanze (34) trennbar ist.

18. Pflückvorrichtung nach einem der Ansprüche 5 bis 17, **dadurch gekennzeichnet, dass** an der Halterung (3) wenigstens ein Trennmesser (39) starr befestigt ist, gegen welches der Stängel (33) mittels des Mitnehmers (15) führbar und somit der Stängel (33) von der Wurzel der Pflanze (34) trennbar ist.

19. Pflückvorrichtung nach einem der Ansprüche 5 bis 18, **dadurch gekennzeichnet, dass** an einem dem Erdboden (9) abgewandten Ende oder Endbereich der Pflückwalze (6) ein Zerkleinerer (27) vorgesehen ist, mittels welchem ein Teil des Stängels (33) zerkleinerbar ist.

20. Pflückvorrichtung nach einem der Ansprüche 5 bis 19, **dadurch gekennzeichnet, dass** an der Halterung (3) wenigstens eine Teilerspitze (14) und eine die Pflückwalze (6) teilweise umgebende Bogenführung (37) befestigt sind, entlang welcher der Stängel (33) mittels des Mitnehmers (15) in Richtung des Pflückspalts (30) führbar ist.

21. Pflückvorrichtung nach einem der Ansprüche 5 bis 20, **dadurch gekennzeichnet, dass** der Mitnehmer (15) lösbar an der Pflückwalze (6) befestigt und/oder in seiner Form variierbar ausgestaltet ist.

22. Pflückvorrichtung nach einem der vorangehenden Ansprüche, **dadurch gekennzeichnet, dass** entlang einer parallel zur Längsachse des Pflückspalts (30) ausgerichteten Achse mehrere Häckselmesser (23, 49) im Abstand zueinander angeordnet sind, mittels welchen der Stängel (33) in mehrere Teile zerschneidbar ist.

23. Pflückvorrichtung nach Anspruch 22, **dadurch gekennzeichnet, dass** die Häckselmesser (23, 49) starr an der Halterung (3) oder an einer drehbar an der Halterung (3) gelagerten Häckselwalze (50) befestigt sind, deren Drehachse parallel zur Längsachse des Pflückspalts (30) ausgerichtet ist.

24. Pflückvorrichtung nach Anspruch 22 und Anspruch 5 oder 10, **dadurch gekennzeichnet, dass** die Häckselmesser an der Pflückwalze (6) oder an der Hilfswalze (7) befestigt sind.

25. Pflückvorrichtung nach Anspruch 9 und einem der Ansprüche 22 bis 24, **dadurch gekennzeichnet, dass** die Häckselmesser (23, 49) und die Zackenscheiben (22) axial versetzt zueinander angeordnet sind und einander zumindest teilweise überlappen.

26. Pflückvorrichtung nach Anspruch 25, **dadurch gekennzeichnet, dass** die Häckselmesser (23, 49) an den Zackenscheiben (22) anliegen und/oder gegen diese vorgespannt sind.

27. Pflückvorrichtung nach einem der vorangehenden Ansprüche und Anspruch 3, **dadurch gekennzeichnet, dass** an der Halterung (3) wenigsten eine Einzugswalze (8) drehbar gelagert ist, deren Drehachse parallel zur Längsachse des Pflückspalts (30) ausgerichtet ist, wobei wenigstens ein sich radial von der Drehachse der Einzugswalze (8) weg erstreckendes Einzugselement (16) an der Einzugswalze (8) befestigt ist.

28. Pflückvorrichtung nach Anspruch 27, **dadurch gekennzeichnet, dass** an einem dem Erdboden (9) zugewandten Ende oder Endbereich der Einzugswalze (8) wenigsten ein Trennmesser (57) befestigt ist, mittels welchem der Stängel (33) von der Wurzel der Pflanze (34) trennbar ist.

29. Pflückvorrichtung nach Anspruch 27 oder 28, **dadurch gekennzeichnet, dass** an der Halterung (3) wenigstens ein Trennmesser (40) starr befestigt ist, gegen welches der Stängel (33) mittels des Einzugselements (16) führbar und somit der Stängel (33) von der Wurzel der Pflanze (34) trennbar ist.

30. Pflückvorrichtung nach einem der Ansprüche 27 bis 29, **dadurch gekennzeichnet, dass** an der Halterung (3) eine Teilerspitze (14) und eine die Einzugswalze (8) teilweise umgebende Bogenführung (38) befestigt sind, entlang welcher der Stängel (33) mittels des Einzugselements (16) in Richtung des Mitnehmers (15) führbar ist.

31. Pflückvorrichtung nach einem der Ansprüche 27 bis 30, **dadurch gekennzeichnet, dass** das Einzugselement (16) lösbar an der Einzugswalze (8) befestigt und/oder in seiner Form variierbar ausgestaltet ist.

32. Pflückvorrichtung nach Anspruch 5 und einem der Ansprüche 27 bis 31, **dadurch gekennzeichnet, dass** zwischen der Einzugswalze (8) und der Pflückwalze (6) wenigstens eine Einzugsführung (32) befestigt ist, wobei der Stängel (33) mittels des Einzugselements (16) entlang der Einzugsführung (32) in Richtung des Mitnehmers (15) führbar ist.

33. Pflückvorrichtung nach Anspruch 32, **dadurch gekennzeichnet, dass** der Mitnehmer (15) und das Einzugselement (16) axial versetzt zueinander angeordnet sind, wobei die Summe aus dem Abstand zwischen einem radial äußerem Ende des Mitnehmers (15) und der Drehachse der Pflückwalze (6) und dem Abstand zwischen einem radial äußerem Ende des Einzugselements (16) und der Drehachse der Einzugswalze (8) größer oder gleich dem Abstand zwischen der Drehachse der Pflückwalze (6) und der Drehachse der Einzugswalze (8) ist.

34. Pflückvorrichtung nach einem der vorangehenden Ansprüche, **dadurch gekennzeichnet, dass** der Pflückspalt (30) gegenüber der vertikalen Richtung neigbar ist.

35. Pflückvorrichtung nach einem der vorangehenden Ansprüche, **dadurch gekennzeichnet, dass** an der Halterung (3) eine Pflanzenführung (13) befestigt ist, mittels welcher die Pflanze (34) von dem Pflückspalt (30) weg neigbar ist.

36. Pflückvorrichtung nach einem der vorangehenden Ansprüche, **dadurch gekennzeichnet, dass** ein oberes Reststück der Pflanze (34) oberhalb der Pflückvorrichtung (19) entgegen der Bewegungsrichtung (10) der Pflückvorrichtung (19) abführbar ist.

37. Pflückvorrichtung nach einem der vorangehenden Ansprüche und Anspruch 3, **dadurch gekennzeichnet, dass** an der Halterung (3) wenigstens ein zweiter Mitnehmer (47) bewegbar geführt ist, und der Stängel (33) mit seiner Längsachse parallel oder im Wesentlichen parallel zu der Längsachse des Pflückspalts (6) ausgerichtet von beiden Mitnehmern (15, 47) dem Pflückspalt (30) zuführbar ist, die im Abstand zueinander angeordnet sind.

38. Pflückvorrichtung nach Anspruch 37, **dadurch gekennzeichnet, dass** der Stängel (33) mittels beider Mitnehmer (15, 47) durch den Pflückspalt (30) hindurch führbar ist.

39. Pflückvorrichtung nach Anspruch 5 und Anspruch 37 oder 38, **dadurch gekennzeichnet, dass** der zweite Mitnehmer (47) an der Pflückwalze (6) befestigt ist und die beiden Mitnehmer (15, 47) im Abstand zueinander angeordnet sind.

40. Pflückvorrichtung nach einem der vorangehenden Ansprüche, **dadurch gekennzeichnet, dass** die Halterung (3) an einem Fahrzeug (1) befestigt ist.

41. Pflückvorrichtung nach einem der vorangehenden Ansprüche, **dadurch gekennzeichnet, dass** an der Halterung (3) ein drehbarer Verteilschlegel (63) angeordnet ist, mittels welchem ein im Erdboden (9) sitzender Reststoppel der Pflanze (34) zerkleinerbar oder Pflanzenreste abführbar sind.

42. Pflückvorrichtung nach einem der vorangehenden Ansprüche, **dadurch gekennzeichnet, dass** die Pflanze (34) eine Maispflanze oder eine Sonnenblume ist.

43. Pflückvorrichtung nach Anspruch 18, **dadurch gekennzeichnet, dass** das Trennmesser (39) scheibenförmig ausgebildet ist und der Mitnehmer (15) wenigstens einen abgewinkelten oder bogenförmigen Finger (78) mit einer Schneide (79) aufweist.

44. Pflückvorrichtung nach Anspruch 29, **dadurch gekennzeichnet, dass** das Trennmesser (40) scheibenförmig ausgebildet ist und das Einzugselement (16) wenigstens einen abgewinkelten oder bogenförmigen Finger (81) mit einer Schneide (82) aufweist.

45. Pflückvorrichtung nach Anspruch 27, **dadurch gekennzeichnet, dass** die Einzugswalze (8) oberhalb des Einzugselements (16) einen kegelstumpfförmigen Bereich (83) aufweist, dessen Durchmesser sich mit abnehmendem Abstand zum Einzugselement (16) vergrößert.

46. Pflückvorrichtung nach den Ansprüchen 5 und 27, **dadurch gekennzeichnet, dass** an der Halterung (3) ein Leitblech (85) befestigt ist, welches in einer Richtung von der Einzugswalze (8) bis zur Pflückwalze (6) nach oben geneigt ist und sich bogenförmig um die Pflückwalze (6) auf den Pflückspalt (30) zu erstreckt.

47. Pflückvorrichtung nach Anspruch 5, **dadurch gekennzeichnet, dass** an der Pflückwalze (6) wenigstens ein elastischer Finger (86) befestigt ist, der sich radial oder in etwa radial von der Pflückwalze (6) über eine Länge wegerstreckt, die größer als der Abstand zwischen der Pflückwalze (6) und dem Pflückspalt (30) ist.

48. Pflückvorrichtung nach Anspruch 8, **dadurch gekennzeichnet, dass** die Förderelemente rings der Drehachse (94), der Pflückwalze (6) angeordnete und mit dieser über Steckverbindungen verbundene Segmente (87) aufweisen, die jeweils einen Rücken (91) und dazu quer verlaufende Schenkel (92) aufweisen, von denen wenigstens einer mit Zacken (93) versehen ist.

49. Pflückvorsatz mit einem Rahmen und mehreren nebeneinander angeordneten Pflückvorrichtungen (19) nach einem der vorangehenden Ansprüche, **dadurch gekennzeichnet, dass** die Halterungen (3) zu dem Rahmen zusammengesetzt oder von diesem gebildet sind.

50. Pflückvorsatz nach Anspruch 49, **dadurch gekennzeichnet, dass** der Rahmen (3) mehrere schwenkbar miteinander verbundene Rahmenteile (60, 61) aufweist und zusammenklappbar ausgebildet ist.

51. Verfahren zum Pflücken wenigstens einer an einem länglichen Stängel (33) einer Pflanze (34) sitzenden Frucht (36), wobei
- der Stängel (33) einem von seitlichen Rändern (31) begrenzten, länglichen Pflückspalt (30) zugeführt und anschließend die Frucht (36) an den Rändern (31) vom Stängel (33) getrennt wird, indem der Stängel (33) durch den Pflückspalt (30) hindurch geführt wird, sodass der Stängel (33) ohne die Frucht (36) durch den Pflückspalt (30) hindurchtritt,
**dadurch gekennzeichnet, dass**
- der Pflückspalt mit seiner Längsachse vertikal oder im Wesentlichen vertikal zum Erdboden (9) ausgerichtet ist und der Stängel (33) mit seiner Längsachse parallel oder im Wesentlichen parallel zu der Längsachse des Pflückspalts (30) ausgerichtet dem Pflückspalt (30) zugeführt wird.

52. Verfahren nach Anspruch 51, **dadurch gekennzeichnet, dass** der Stängel (33) mit seiner Längsachse parallel oder im Wesentlichen parallel zu der Längsachse des Pflückspalts (30) ausgerichtet durch den Pflückspalt (30) hindurchgeführt wird.

## Claims

1. Harvesting device for harvesting at least one crop head (36) growing on an elongated stalk (33) of a plant (34) having
- a holder (3) movable along the ground (9) and
- an elongated separating gap (30) provided on the holder (3) and delimited by lateral edges (31), through which, when the crop head (36) has been severed at the edges (31), the stalk (33) minus the crop head (36) is guided, **characterised in that**
- the separating gap with its lengthwise axis is aligned vertically or approximately vertically to the ground (9).

2. Harvesting device in accordance with claim 1, **characterised in that** the stalk (33) is guided towards the separating gap (30) with its lengthwise axis aligned parallel or approximately parallel to the lengthwise axis of the separating gap (30).

3. Harvesting device in accordance with claim 1 or claim 2, **characterised in that** at least one pusher tappet (15) is guided movably on the holder (3), by means of which the stalk (33) is caught and guided to the separating gap (30) with its length-wise axis aligned parallel or approximately parallel to the lengthwise axis of the separating gap (30).

4. Harvesting device in accordance with claim 3, **characterised in that** the stalk (33) is guided through the separating gap (30) by the pusher tappet (15).

5. Harvesting device in accordance with claim 3 or claim 4, **characterised in that** the pusher tappet (15) is attached to a separating roller (6) mounted rotatably on the holder (3), and whose axis of rotation is aligned parallel to the lengthwise axis of the separating gap (30).

6. Harvesting device in accordance with claim 5, **characterised in that** the separating roller (6) is arranged adjacent to or in front of the separating gap (30) viewed in the direction of motion (10) of the harvesting device (2).

7. Harvesting device in accordance with claim 5 or claim 6, **characterised in that** the pusher tappet (15) extends radially to the axis of rotation of the separating roller (6) and the distance between the axis of rotation of the separating roller (6) and a radial outer end or end area of the pusher tappet (15) is greater than or equal to the distance between the axis of rotation of the separating roller (6) and the separating gap (30).

8. Harvesting device in accordance with any of the claims 5 to 7, **characterised in that** several conveying elements (22, 24) are arranged at a distance to one another on the separating roller (6) along the axis of rotation of the separating roller (6), by means of which the stalk (33) or parts thereof passing through the separating gap (30) are transported away from the separating gap (30).

9. Harvesting device in accordance with claim 8, **characterised in that** the conveying elements comprise serrated disks (22) and/or plates (24).

10. Harvesting device in accordance with any of the claims 5 to 9, **characterised in that** at least one auxiliary roller (7) is mounted rotatably on the holder (3), whose axis of rotation is aligned parallel to the lengthwise axis of the separating gap (30), where several conveying elements (25) are arranged at a distance to one another on the auxiliary roller (7) by means of which the stalk or parts thereof passing through the separating gap (30) are transported away from the separating gap (30).

11. Harvesting device in accordance with the claims 9 and 10, **characterised in that** the conveying elements of the auxiliary roller (7) comprise plates (25) which engage in the spaces (26) between the plates (24) of the separating roller (6).

12. Harvesting device in accordance with claim 11, **characterised in that** projections (42) formed as tearing edges are mounted in the spaces (26) on the separating roller (6).

13. Harvesting device in accordance with any of the claims 10 to 12, **characterised in that** the separating roller (6) and the auxiliary roller (7) turn, or are capable of turning, at different circumferential speeds in relation to one another.

14. Harvesting device in accordance with any of the claims 5 to 13, **characterised in that** several splitting elements (43) are attached to the holder (3) at a distance from one another along an axis aligned parallel to the lengthwise axis of the separating gap (30), where the stalks (33) or parts thereof are guided between the splitting elements (43) and the separating roller (6) and are split up.

15. Harvesting device in accordance with any of the claims 5 to 14, **characterised in that** on the separating roller (6) at least one separating strip, which may be continuous or divided into several sections, is provided which extends parallel to the axis of rotation of the separating roller (6) or extends towards the axis of rotation of the separating roller (6) in spiral form around the axis of rotation of the separating roller (6).

16. Harvesting device in accordance with the claims 9 and 15, **characterised in that** the separating strip or separating strips are formed by the plates (24) of the separating roller (6).

17. Harvesting device in accordance with any of the claims 5 to 16, **characterised in that** at least one cutter (56) is attached to the end or end area of the separating roller (6) closest to the ground, by means of which the stalk (33) is severed from the root of the plant (34).

18. Harvesting device in accordance with any of the claims 5 to 17, **characterised in that** at least one cutter (39) is attached rigidly to the holder (3) and against which the stalk (33) is guided by the pusher tappet (15), thereby severing the stalk (33) from the root of the plant (34).

19. Harvesting device in accordance with any of the claims 5 to 18, **characterised in that** a shredder (27) is provided at the end or end area of the separating roller (6) furthest from the ground (9), by means of which part of the stalk (33) can be chopped up.

20. Harvesting device in accordance with any of the claims 5 to 19, **characterised in that** at least one separating tip (14) and a curved guide (37) which partially surrounds the separating roller (6) are attached to the holder (3), along which the stalk (33) is guided towards the separating gap (30) by the pusher tappet (15).

21. Harvesting device in accordance with any of the claims 5 to 20, **characterised in that** the pusher tappet (15) is mounted detachably on the separating roller (6) and/or is capable of being varied in shape.

22. Harvesting device in accordance with any of the aforementioned claims, **characterised in that** several chopping cutters (23, 49) are arranged at a distance from one another along an axis parallel to the lengthwise axis of the separating gap (30), by means of which the stalk (33) can be cut into several pieces.

23. Harvesting device in accordance with claim 22, **characterised in that** the chopping cutters (23, 49) are attached rigidly to the holder (3) or to a chopping roller (50) mounted rotatably on the holder (3), whose axis of rotation is aligned parallel to the lengthwise axis of the separating gap (30).

24. Harvesting device in accordance with claim 22 and claim 5 or claim 10, **characterised in that** the chopping cutters are attached to the separating roller (6) or to the auxiliary roller (7).

25. Harvesting device in accordance with claim 9 and any of the claims 22 to 24, **characterised in that** the chopping cutters (23, 49) and the serrated disks (22) are axially offset in relation to one another and overlap one another at least partially.

26. Harvesting device in accordance with claim 25, **characterised in that** the chopping cutters (23, 49) lie against the serrated disks (22) and/or press against these.

27. Harvesting device in accordance with any of the aforementioned claims and claim 3, **characterised in that** at least one infeed roller (8) is mounted rotatably on the holder (3), whose axis of rotation is aligned parallel to the lengthwise axis of the separating gap (30), where at least one infeed element (16) is attached to the infeed roller extending radially away from the axis of rotation of the infeed roller (8).

28. Harvesting device in accordance with claim 27, **characterised in that** at least one cutter (57) is attached to the end or end area of the infeed roller (8) closest to the ground (9), by means of which the stalk (33) is severed from the root of the plant (34).

29. Harvesting device in accordance with claim 27 or claim 28, **characterised in that** at least one cutter (40) is attached rigidly to the holder (3), against which the stalk (33) is guided by the infeed element (16), thereby severing the stalk (33) from the root of the plant (34).

30. Harvesting device in accordance with any of the claims 27 to 29, **characterised in that** a separating tip (14) and a curved guide (38) which partially surrounds the infeed roller (8) are attached to the holder (3), along which the stalk (33) is guided towards the. pusher tappet (15) by the infeed element (16).

31. Harvesting device in accordance with any of the claims 27 to 30, **characterised in that** the infeed element (16) is mounted detachably on the infeed roller (8) and/or is capable of being varied in shape.

32. Harvesting device in accordance with claim 5 and any of the claims 27 to 31, **characterised in that** at least one infeed guide (32) is mounted between the infeed roller (8) and the separating roller (6), where the stalk (33) is guided along the infeed guide (32) by the infeed element (16) towards the pusher tappet (15).

33. Harvesting device in accordance with claim 32, **characterised in that** the pusher tappet (15) and the infeed element (16) are axially offset in relation to one another, where the sum of the distance between a radially outer end of the pusher tappet (15) and the rotation axis of the infeed roller (8) is greater than or equal to the distance between the rotation axis of the separating roller (6) and the rotation axis of the infeed roller (8).

34. Harvesting device in accordance with any of the aforementioned claims, **characterised in that** the angle of the separating gap (30) can be altered with reference to the vertical.

35. Harvesting device in accordance with any of the aforementioned claims, **characterised in that** a guide (13) is attached to the holder (3) by means of which the plant (34) can be inclined away from the separating gap (30).

36. Harvesting device in accordance with any of the aforementioned claims, **characterised in that** a remaining upper part of the plant (34) can be guided away above the harvesting device (19) contrary to the direction of motion (10) of the harvesting device (19).

37. Harvesting device in accordance with any of the aforementioned claims and claim 3, **characterised in that** at least a second pusher tappet (47) is guided movably on the holder (3) and the stalk (33) is guided towards the separating gap (30) with its lengthwise axis aligned parallel or approximately parallel to the lengthwise axis of the separating gap (6) by the two pusher tappets (15, 47) which are arranged at a distance from one another.

38. Harvesting device in accordance with claim 37, **characterised in that** the stalk (33) is guided through the separating gap (30) by the two pusher tappets (15, 47).

39. Harvesting device in accordance with claim 5 and claim 37 or claim 38, **characterised in that** the second pusher tappet (47) is attached to the separating roller (6) and that the two pusher tappets (15, 47) are arranged at a distance from one another.

40. Harvesting device in accordance with any of the aforementioned claims, **characterised in that** the holder (3) is mounted on a vehicle (1).

41. Harvesting device in accordance with any of the aforementioned claims, **characterised in that** a rotatable scatter flail (63) is arranged on the holder (3) by means of which the plant stubble (34) remaining in the ground (9) is shredded or plant fragments removed.

42. Harvesting device in accordance with any of the aforementioned claims, **characterised in that** the plant (34) is a maize plant or a sunflower.

43. Harvesting device in accordance with claim 18, **characterised in that** the cutter (39) is shaped as a disk and the pusher tappet (15) has at least one angled or curved finger (78) with a blade (79).

44. Harvesting device in accordance with claim 29, **characterised in that** the cutter (40) is shaped as a disk and the infeed element (16) has at least one angled or curved finger (81) with a blade (82).

45. Harvesting device in accordance with claim 27, **characterised in that** the infeed roller (8) has a tapered area (83) above the infeed element (16), whose diameter increases as the distance to the infeed element (16) decreases.

46. Harvesting device in accordance with claim 5 and claim 27, **characterised in that** a guide plate (85) is attached to the holder(3), and which is inclined upwards in the direction from the infeed roller (8) to the separating roller (6) and extends in a curve around the separating roller (6) towards the separating gap (30).

47. Harvesting device in accordance with claim 5, **characterised in that** at least one elastic finger (86) is attached to the separating roller (6) which extends radially or approximately radially away from the separating roller (6) over a distance which is greater than the distance between the separating roller (6) and the separating gap (30).

48. Harvesting device in accordance with claim 8, **characterised in that** the conveying elements have segments (87) arranged around the axis of rotation (94) of the separating roller (6) and which are joined to this by means of plug-in connections, each of which segments has a back (91) and legs (92) extending perpendicularly to this, of which at least one has serrations (93).

49. Harvesting attachment with a frame and several harvesting devices (19) in accordance with any of the aforementioned claims arranged adjacent to one another, **characterised in that** the holders (3) are assembled to form the frame or are formed by it.

50. Harvesting attachment in accordance with claim 49, **characterised in that** the frame (3) has several sections (60, 61) which are joined pivotably with one another, and is designed to be folded together.

51. Process for harvesting at least one crop head (36) growing on the elongated stalk (33) of a plant (34), where
- the stalk (33) is guided to an elongated separating gap (30) with lateral edges (31), the crop head (36) is then severed from the stalk (33) at these edges (31) by guiding the stalk (33) through the separating gap (30) so that the stalk (33) passes through the separating gap (30) without the crop head (36),
**characterised in that**
- the lengthwise axis of the separating gap is aligned vertically or approximately vertically to the ground (9) and the lengthwise axis of the stalk (33) is aligned parallel or approximately parallel to the lengthwise axis of the separating gap (30) when guided towards the separating gap (30).

52. Process in accordance with claim 51, **characterised in that** the stalk (33) is guided through the separating gap (30) with its lengthwise axis aligned parallel or approximately parallel to the lengthwise axis of the separating gap (30).

## Revendications

1. Dispositif servant à cueillir au moins un fruit (36) situé sur une tige (33) longiligne d'une plante (34), avec
- une fixation (3) déplaçable le long du sol (9)
et
- une fente de cueillette (30) longiligne révue contre la fixation (3) et limitée par des bords (31) à travers laquelle la tige (33) est guidable sans le fruit (36) le long des bords (31) tandis que ledit fruit est découpé, **caractérisé en ce que**
- l'axe longitudinal de la fente de cueillette est orienté verticalement ou essentiellement perpendiculaire au sol (9).

2. Dispositif de cueillette selon la revendication 1, **caractérisée en ce que** l'axe longitudinal de la tige (33) peut être amené à la fente de cueillette (30) orienté parallèlement ou pour l'essentiel parallèlement à l'axe longitudinal de la fente de cueillette (30).

3. Dispositif de cueillette selon la revendication 1 ou 2, **caractérisé en ce que** sur la fixation (3) au moins un taquet entraîneur (15) est guidé mobile, qui permet de saisir la tige (33) et permet d'amener cette dernière à la fente de cueillette (30) avec son axe longitudinal orienté parallèle ou essentiellement parallèle à l'axe longitudinal de la fente de cueillette (30).

4. Dispositif de cueillette selon la revendication 3, **caractérisé en ce que** le taquet entraîneur (15) permet de guider la tige (33) pendant son passage à travers la fente de cueillette (30).

5. Dispositif de cueillette selon la revendication 3 ou 4, **caractérisé en ce que** le taquet entraîneur (15) est fixé contre un rouleau de cueillette (6) en appui rotatif contre la fixation (3), rouleau dont l'axe de rotation est orienté parallèle à l'axe longitudinal de la fente de cueillette (30).

6. Dispositif de cueillette selon la revendication 5, **caractérisé en ce que** le rouleau de cueillette (6) est agencé, lorsque observé dans le sens (10) dans lequel se déplace le dispositif de cueillette (2), à côté de la fente de cueillette (30) ou devant cette dernière.

7. Dispositif de cueillette selon la revendication 5 ou 6, **caractérisé en ce que** le taquet entraîneur (15) s'étend de manière radiale par rapport à l'axe de rotation du rouleau de cueillette (6) et que l'écart entre l'axe de rotation du rouleau de cueillette (6) et une extrémité radiale ou zone terminale extérieure du taquet entraîneur (15) est plus grand que l'écart entre l'axe de rotation du rouleau de cueillette (6) et la fente de cueillette (30), ou égal audit écart.

8. Dispositif de cueillette selon l'une des revendications 5 à 7, **caractérisé en ce que** le long de l'axe de rotation du rouleau de cueillette (6) sont agencés plusieurs éléments de convoyage (22, 24) espacés les uns des autres sur le rouleau de cueillette (6), au moyen desquels il est possible d'évacuer, de la fente de cueillette (30), la tige (33) guidée à travers la fente de cueillette (30) ou des parties de ladite tige.

9. Dispositif de cueillette selon la revendication 8, **caractérisé en ce que** les éléments convoyeurs comprennent des disques dentés (22) et/ou des lamelles (24).

10. Dispositif de cueillette selon l'une des revendications 5 à 9, **caractérisé en ce que** sur la fixation (3) au moins un rouleau auxiliaire (7) est en appui rotatif, dont l'axe de rotation est orienté parallèle à l'axe longitudinal de la fente de cueillette (30), sachant que plusieurs éléments convoyeurs (25) sont agencés espacés les uns des autres sur le rouleau auxiliaire (7), au moyen desquels il est possible de guider la tige ou des parties de celle-ci à travers la fente de cueillette (30) pour l'évacuer de ladite fente de cueillette (30).

11. Dispositif de cueillette selon les revendications 9 et 10, **caractérisé en ce que** les éléments convoyeurs du rouleau auxiliaire (7) comprennent des lamelles (25) capables de pénétrer dans les cavités (26) situées entre les lamelles (24) du rouleau de cueillette (6).

12. Dispositif de cueillette selon la revendication 11, **caractérisé en ce que** dans les cavités (26), des saillies (42) en forme d'arêtes de déchirure sont fixées contre le rouleau de cueillette (6).

13. Dispositif de cueillette selon l'une des revendications 10 à 12, **caractérisé en ce que** le rouleau de cueillette (6) et le rouleau auxiliaire (7) tournent ou peuvent tourner avec des vitesses circonférentielles réciproquement différentes.

14. Dispositif de cueillette selon l'une des revendications 5 à 13, **caractérisé en ce que** le long d'un axe aligné parallèlement à l'axe longitudinal de la fente de cueillette (30), plusieurs éléments partageurs (43) sont fixés distants les uns des autres contre la fixation (3), sachant que la tige (33) ou des parties de celle-ci peuvent passer entre les éléments partageurs (43) et le rouleau de cueillette (6), et qu'il est possible ce faisant de les partager.

15. Dispositif de cueillette selon l'une des revendications 5 à 14, **caractérisé en ce que** contre le rouleau de cueillette (6) est prévu au moins un bandeau de cueillette continu ou subdivisé en plusieurs parties, bandeau qui s'étend parallèlement à l'axe de rotation du rouleau de cueillette (6) ou dont le tracé est, en direction de l'axe rotatif du rouleau de cueillette (6), hélicoïdal autour de l'axe de rotation du rouleau de cueillette (6).

16. Dispositif de cueillette selon les revendications 9 et 15, **caractérisé en ce qu'**au moins un bandeau de cueillette est formé par les lamelles (24) du rouleau de cueillette (6).

17. Dispositif de cueillette selon l'une des revendications 5 à 16, **caractérisé en ce qu'**à une extrémité regardant le sol (9) ou à une extrémité du rouleau de cueillette (6) est fixé au moins une lame de coupe (56) permettant de détacher la tige (33) de la racine de la plante (34).

18. Dispositif de cueillette selon l'une des revendications 5 à 17, **caractérisé en ce que** sur la fixation (3) au moins une lame de sectionnement (39) est fixée rigidement, lame contre laquelle il est possible de guider la tige (33) au moyen du taquet entraîneur et ainsi de détacher la tige (33) de la racine de la plante (34).

19. Dispositif de cueillette selon l'une des revendications 5 à 18, **caractérisé en ce que** sur un côté ne regardant pas le sol (9) ou dans une zone terminale du rouleau de cueillette (6) a été prévu un broyeur (27) permettant de broyer une partie de la tige (33).

20. Dispositif de cueillette selon l'une des revendications 5 à 19, **caractérisé en ce que** contre la fixation (3) ont été fixés au moins une pointe diviseuse (14) et un guidage arqué (37) entourant en partie le rouleau de cueillette (6), guidage le long duquel la tige (33) peut être guidée au moyen du taquet entraîneur (15) en direction de la fente de cueillette (30).

21. Dispositif de cueillette selon l'une des revendications 5 à 20, **caractérisé en ce que** le taquet entraîneur (15) est fixé de manière détachable contre le rouleau de cueillette (6) et/ou qu'il est configuré de sorte à pouvoir en varier la forme.

22. Dispositif de cueillette selon l'une des revendications précédentes, **caractérisé en ce que** le long d'un axe parallèle à l'axe longitudinal de la fente de cueillette (30), plusieurs lames déchiqueteuses (23, 49) sont agencées à distance les unes des autres, qui permettent de découpez les tiges (33) en plusieurs parties.

23. Dispositif de cueillette selon la revendication 22, **caractérisé en ce que** les lames déchiqueteuses (23, 49) sont fixées de manière rigide contre la fixation (3) ou contre un rouleau déchiqueteur (50) en appui rotatif contre la fixation (3), rouleau dont l'axe de rotation est parallèle à l'axe longitudinal de la fente de cueillette (30).

24. Dispositif de cueillette selon la revendication 22 et la revendication 5 ou 10, **caractérisé en ce que** les lames de broyage sont fixées contre le rouleau de cueillette (6) ou contre le rouleau auxiliaire (7).

25. Dispositif de cueillette selon la revendication 9 et l'une des revendications 22 à 24, **caractérisé en ce que** les lames de broyage (23, 49) et les disques dentés (22) sont agencés décalés axialement les uns par rapport aux autres, qu'ils se chevauchent les uns les autres au moins en partie.

26. Dispositif de cueillette selon la revendication 25, **caractérisé en ce que** les lames de broyage (23, 49) appliquent contre les disques dentés (22) et/ou qu'elles sont précontraintes contre eux.

27. Dispositif de cueillette selon l'une des revendications précédentes et la revendication 3, **caractérisé en ce que** contre la fixation (3) au moins un rouleau d'engagement (8) est en appui rotatif, rouleau dont l'axe rotatif est orienté parallèle à l'axe longitudinal de la fente de cueillette (30), sachant qu'au moins un élément d'engagement (16) s'éloignant radialement de l'axe de rotation du rouleau d'engagement (8) est fixé contre le rouleau d'engagement (8).

28. Dispositif de cueillette selon la revendication 27, **caractérisé en ce que** contre une extrémité regardant le sol (9) ou une zone terminale du rouleau d'engagement (8) a été fixée au moins une lame de sectionnement (57) au moyen de laquelle la tige (33) est séparable de la racine de la plante (34).

29. Dispositif de cueillette selon la revendication 27 ou 28, **caractérisé en ce que** contre la fixation (3) est fixée rigidement au moin une lame de sectionnement (40) contre laquelle il est possible de guider la tige (33) au moyen de l'élément d'engagement (16), et ainsi de sectionner la tige (33) de la racine de la plante (34).

30. Dispositif de cueillette selon l'une des revendications 27 à 29, **caractérisé en ce que** contre la fixation (3) sont fixés une pointe diviseuse (14) un guidage arqué (38) entourant en partie le rouleau d'engagement (8), guidage le long duquel il est possible de guider la tige (33) en direction du taquet entraîneur (15) au moyen de l'élément d'engagement (16).

31. Dispositif de cueillette selon l'une des revendications 27 à 30, **caractérisé en ce que** l'élément d'engagement (16) est fixé de manière détachable contre le rouleau d'engagement (8) et/ou que la forme cet élément est configurée variable.

32. Dispositif de cueillette selon la revendication 5 et l'une des revendications 27 à 31, **caractérisé en ce qu'**entre le rouleau d'engagement (8) et le rouleau de cueillette (6) est fixé au moins un guidage d'engagement (32), sachant qu'il est possible de guider la tige (33) au moyen de l'élément d'engagement (16) le long du guidage d'engagement (32) en direction du taquet entraîneur (15).

33. Dispositif de cueillette selon la revendication 32, **caractérisé en ce que** le taquet entraîneur (15) et l'élément d'engagement (16) sont agencés décalés axialement l'un par rapport à l'autre, sachant que la somme de l'écart d'une part entre une extrémité extérieure radiale du taquet entraîneur (15) et l'axe de rotation du rouleau de cueillette (6), et de l'écart d'autre part entre une extrémité extérieure radiale de l'élément d'engagement (16) et l'axe de rotation du rouleau d'engagement (8) est supérieure ou égale à l'écart entre l'axe de rotation du rouleau de cueillette (6) et l'axe de rotation du rouleau d'engagement (8).

34. Dispositif de cueillette selon l'une des revendications précédentes, **caractérisé en ce que** la fente de cueillette (30) est inclinable par rapport au sens vertical.

35. Dispositif de cueillette selon l'une des revendications précédentes, **caractérisé en ce que** contre la fixation (3) est fixé un guidage de plante (13) permettant d'incliner la plante (34) pour l'éloigner le la fente de cueillette (30).

36. Dispositif de cueillette selon l'une des revendications précédentes, **caractérisé en ce qu'**une partie résiduelle supérieure de la plante (34) est évacuable au dessus du dispositif de cueillette (19) en sens inverse du mouvement (10) décrit par le dispositif de cueillette (19).

37. Dispositif de cueillette selon l'une des revendications précédentes et la revendication 3, **caractérisé en ce que** contre la fixation (3) au moins un second taquet entraîneur (47) est guidé de manière mobile, et que la tige (33) peut, avec son axe longitudinal aligné parallèle ou essentiellement parallèle à l'axe longitudinal de la fente de cueillette (6), être amenée par les deux taquets entraîneurs (15, 47) à la fente de cueillette (30), taquets agencés à distance l'un de l'autre.

38. Dispositif de cueillette selon la revendication 37, **caractérisé en ce qu'**il est possible de guider la tige (33) au moyen des deux taquets entraîneurs (15, 47) à travers la fente de cueillette (30).

39. Dispositif de cueillette selon la revendication 3 et la revendication 37 ou 38, **caractérisé en ce que** le second taquet entraîneur (47) est fixé contre le rouleau de cueillette (6) et **en ce que** les deux taquets entraîneurs (15, 47) agencés à distance l'un de l'autre.

40. Dispositif de cueillette selon l'une des revendications précédentes, **caractérisé en ce que** la fixation (3) est fixée contre un véhicule (1).

41. Dispositif de cueillette selon l'une des revendications précédentes, **caractérisé en ce qu'**est agencé contre la fixation (3) un fléau répartiteur (63) rotatif au moyen duquel il est possible de broyer un chaume résiduel de plante (34) en assise dans le sol (9), ou d'évacuer des résidus de plante.

42. Dispositif de cueillette selon l'une des revendications précédentes, **caractérisé en ce que** la plante (34) est un maïs ou un tournesol.

43. Dispositif de cueillette selon la revendication 18, **caractérisé en ce que** la lame de sectionnement (39) est configurée en disque et que le taquet entraîneur (15) comporte au moins un doigt (78) coudé ou arqué équipé d'un tranchant (79).

44. Dispositif de cueillette selon la revendication 29, **caractérisé en ce que** la lame de sectionnement (40) est configurée en disque et que l'élément d'engagement (16) présente au moins un doigt (81) coudé ou arqué équipé d'un tranchant (82).

45. Dispositif de cueillette selon la revendication 27, **caractérisé en ce que** le rouleau d'engagement (8) au dessus de l'élément d'engagement (16) présente une zone tronconique (83) dont le diamètre augmente au fur et à mesure que dimininue l'écart par rapport à l'élément d'engagement (16).

46. Dispositif de cueillette selon les revendications 5 et 37, **caractérisé en ce qu'**une tôle de guidage (85) est fixée contre la fixation (3), laquelle tôle est inclinée vers le haut du rouleau d'engagement (8) au rouleau de cueillette (6) et s'étend en forme d'arc autour du rouleau de cueillette (6) en direction de la fente de cueillette (30).

47. Dispositif de cueillette selon la revendication 5, **caractérisé en ce que** contre le rouleau de cueillette (6) est fixé au moins un doigt élastique (86) qui s'éloigne radialement ou de manière approximativement radiale du rouleau de cueillette (6) sur une longueur supérieure à l'écart entre le rouleau de cueillette (6) et la fente de cueillette (30).

48. Dispositif de cueillette selon la revendication 8, **caractérisé en ce que** les éléments convoyeur tout autour de l'axe rotatif (94) du rouleau de cueillette (6) présentent des segments (87) agencés et reliés à ce dernier via des jonctions enfichées, segments qui présentent chaque fois un dos (91) et des branches (92) transversales au dos, dont au moins une est équipée de dents (93).

49. Accessoire cueilleur comprenant un cadre et plusieurs dispositifs de cueillette (19) juxtaposés selon l'une des revendications précédentes, **caractérisé en ce que** les fixations (3) sont assemblées pour former le cadre ou sont formées par ce dernier.

50. Accessoire cueilleur selon la revendication 49, **caractérisé en ce que** le cadre (3) présente plusieurs pièces de cadre (60, 61) reliées entre elles de manière pivotante et configurées repliables ensemble.

51. Procédé pour cueillir au moins un fruit (36) en assise contre la tige longiligne (33) d'une plante (34), sachant que
- la tige (33) est amenée vers une fente de cueillette (30) oblongue limitée par des bords latéraux (31) et qu'ensuite le fruit (36) est détaché de la tige (33) au niveau des bords (31) du fait que la tige (33) est guidée pour traverser la fente de cueillette (30) de sorte que la tige (33) traverse la fente de cueillette (30) sans le fruit (36),
**caractérisé en ce que**
- l'axe longitudinal de la fente de cueillette est orienté à la verticale ou essentiellement à la verticale par rapport au sol (9), et que la tige (33) est amenée, avec son axe longitudinal orienté parallèle ou essentiellement parallèle à l'axe longitudinal de la fente de cueillette (30), à ladite fente de cueillette (30).

52. Procédé selon la revendication 51, **caractérisé en ce que** la tige (33), avec son axe longitudinal aligné parallèle ou essentiellement parallèle à l'axe longitudinal de la fente de cueillette (30), à traverser de manière guider la fente de cueillette (30).
